# EUROPÄISCHE PATENTSCHRIFT

(11) **EP 3 422 243 B1**
(45) Veröffentlichungstag und Bekanntmachung des Hinweises auf die Patenterteilung: **18.08.2021**
(21) Anmeldenummer: 18182581.1
(22) Anmeldetag: 13.12.2016
(51) Int. Cl.: G06F 21/74, G06F 21/83, G06K 19/07

(54) **ID-TOKEN MIT GESCHÜTZTEM MIKROCONTROLLER**
ID-TOKEN WITH SECURE MICROCONTROLLER
TOKEN D'IDENTIFICATION AU MICROCONTRÔLEUR SECURISÉ

(30) Priorität: 15.12.2015 DE 102015225275
(43) Veröffentlichungstag der Anmeldung: 02.01.2019
(62) Teilanmeldung aus: 16819835.6
(73) Patentinhaber: Bundesdruckerei GmbH, 10969 Berlin (DE)
(72) Erfinder: MORGNER, Frank, 15537 Grünheide (DE); KRAUS, Micha, 10827 Berlin (DE); BASTIAN, Paul, 10243 Berlin (DE)
(74) Vertreter: Richardt Patentanwälte PartG mbB

(56) Entgegenhaltungen:
- EP-A1- 2 575 084
- US-A1- 2014 019 746
- "Smart Cards; Secure channel between a UICC and an end-point terminal (Release 7); ETSI TS 102 484", ETSI STANDARD, EUROPEAN TELECOMMUNICATIONS STANDARDS INSTITUTE (ETSI), SOPHIA ANTIPOLIS CEDEX, FRANCE, Bd. SCP-T, Nr. V7.3.0, 1. Januar 2009 (2009-01-01), XP014042875,
- "Smart Cards; Remote APDU structure for UICC based applications (Release 11); ETSI TS 102 226 v11.2.0", , 31. Januar 2013 (2013-01-31), Seiten 2013-1, XP055149593, Gefunden im Internet: URL:http://www.etsi.org/deliver/etsi_ts/10 2200_102299/102226/11.02.00_60/ts_102226v1 10200p.pdf [gefunden am 2014-10-29]

## Beschreibung

Die Erfindung betrifft ein ID-Token mit einem Sensor, einer Kommunikationsschnittstelle und einem ersten Mikrocontroller, wobei das ID-Token einen geschützten zweiten Mikrocontroller mit mindestens einer Mikrocontrollerkommunikationsschnittstelle umfasst, welcher in einer Aufnahme des ID-Tokens angeordnet ist, wobei die Mikrocontrollerkommunikationsschnittstelle einen Dateneingang und einen Datenausgang bereitstellt. Zudem betrifft die Erfindung ein Verfahren zur Überprüfung von Messdaten des Sensors eines erfindungsgemäßen ID-Tokens sowie ein System, welches einen solchen erfindungsgemäßen ID-Token und ein Lesegerät mit einer Kommunikationsschnittstelle zum Datenaustausch mit der Kommunikationsschnittstelle des ID-Tokens umfasst.

Die vorliegende Patentanmeldung ist eine Teilanmeldung zur Stammanmeldung PCT/EP2016/080750, deren Offenbarungsgehalt vollumfänglich zum Gegenstand der vorliegenden Teilanmeldung gemacht wird.

Aus dem Stand der Technik sind ID-Token zur Identifikation bzw. Authentifizierung eines Inhabers des entsprechenden ID-Tokens bekannt, beispielsweise in Form von Dokumenten wie Personalausweisen und Reisepässen, aber auch Zugangskarten, welche einer bestimmten Person beispielsweise den Zugang zu einem Sicherheitsbereich ermöglichen sollen, oder Signaturkarten, mit denen ein elektronische Dokument signiert werden kann.

Bei einer automatisierten, elektronischen Überprüfung solcher ID-Token besteht im Stand der Technik das Problem, dass die entsprechenden Dokumente nicht zwingend nur von der Person verwendet werden können, für die die ID-Token vorgesehen sind. Aus Sicht eines elektronischen Systems, gegenüber dem das ID-Token zur Identifikation bzw. Authentifizierung verwendet wird, definiert sich die Identität des Nutzers allein aus dem verwendeten ID-Token. So kann beispielsweise eine beliebige fremde Person ein gefundenes ID-Token wie etwa eine Zugangskarte dazu nutzen, sich Zutritt zu einem gesperrten Bereich zu verschaffen.

Eine Lösung für dieses Problem bietet beispielsweise ein zusätzlicher Authentifizierungsprozess, in welchem von dem Nutzer des ID-Tokens ein zusätzliches Sicherheitsattribut, beispielsweise eine PIN oder ein biometrisches Merkmal, abgefragt wird, welches sich nicht aus dem Besitz des ID-Tokens ergibt. Der Nutzer des ID-Tokens wird dabei beispielsweise aufgefordert ein entsprechendes zusätzliches Sicherheitsattribut an einem Terminal oder einem anderen externen Gerät einzugeben.

Ein weiteres Problem im Stand der Technik stellen mögliche Manipulationsversuche an dem ID-Token dar. So kann ein Unberechtigter durch entsprechende Manipulationen an dem ID-Token versuchen Zugriff auf die auf dem ID-Token gespeicherten Attribute zur Identifikation bzw. Authentifizierung zu erhalt. Insbesondere besteht die Gefahr, dass das ID-Token derart manipuliert wird, dass es das Vorliegen eines oben beschriebenen zusätzlichen Sicherheitsattributs bestätigt, obwohl dies tatsächlich nicht der Fall.

Ein beispielhaftes Szenario hierfür wäre ein unberechtigter Dritter, der ein auf dem ID-Token gespeichertes zusätzliches Sicherheitsattribut des berechtigten Nutzers des ID-Tokens, beispielsweise eine PIN oder ein biometrisches Merkmal, durch ein selbst gewähltes Sicherheitsattribut ersetzt, wie etwa eine neue PIN oder ein biometrisches Merkmal eines unberechtigten Nutzers. Trotz des zusätzlichen Sicherheitsattributs besteht die Gefahr eines Missbrauchs demnach fort.

Zur Erhöhung der Sicherheit eines ID-Tokens gegenüber solcher Manipulationsversuche bietet sich beispielsweise die Verwendung eines geschützten Mikrocontrollers auf dem ID-Token und/oder einer Verschlüsselung der Kommunikation des ID-Tokens mit externen Geräten, wie etwa Lesegeräten, an. Zum Schutz vor unberechtigten Zugriffen weisen geschützte Mikrocontroller begrenzte physikalische Zugriffsmöglichkeiten auf. So sind besonders sichere Mikrocontroller bekannt, welche beispielweise genau eine Kommunikationsschnittstelle zur kontaktbehafteten Kommunikation mit externen Elementen aufweisen, wobei die Kommunikationsschnittstelle genau einen Dateneingang und einen Datenausgang bereitstellt.

Aufgrund der beschränkten Kommunikationsmöglichkeiten eines oben beschriebenen, geschützten Mikrocontroller kann dieser jedoch nicht dazu verwendet werden einerseits mit einem Lesegerät Daten auszutauschen und andererseits ein zusätzliches Sicherheitsattribut, wie etwa eine PIN oder ein biometrisches Merkmal, mittels eines entsprechenden Sensors zu prüfen.

Somit bleibt entweder die Verwendung eines gegen Manipulationen effektiv gesicherten ID-Tokens, wobei aber die Identität des tatsächlichen Nutzer des ID-Tokens ungewiss ist, oder eines die Identität des tatsächlichen Nutzers durch ein zusätzlichen Sicherheitsattribut vermeintlicher Weise sicherstellenden ID-Tokens , wobei das ID-Token jedoch anfällig für Manipulationen bleibt. Keine dieser beiden Möglichkeiten vermag Missbrauch in Form einer widerrechtlichen Nutzung effektiv zu verhindern.

Desweiteren unterliegt eine Eingabe der zusätzlichen Merkmale, wie etwa eines biometrischen Merkmals oder einer PIN, am Terminal oder einem anderen externen Gerät der Gefahr eines möglichen Skimming-Angriffs. Der Nutzer kann von außen nicht nachvollziehen, ob Manipulationen am Eingabegerät vorgenommen wurden, mit denen ein Angreifer die zusätzlichen Merkmale mitschneiden/abhören kann.

Die EP 2 575 084 A1 beschreibt Techniken, um ein Geheimnis in ein Sicherheitstoken unter Verwendung einer eingebetteten taktilen Sensorbenutzerschnittstelle einzugeben, um das Geheimnis gegen eine gespeicherte Darstellung desselben Geheimnisses zu verifizieren. Eine taktil abtastende Benutzerschnittstelle ist eingerichtet, um ein nutzercodiertes Geheimnis zu empfangen. Eine Decodiereinheit ist eingerichtet zum Erzeugen eines decodierten Geheimnisses durch Decodieren des nutzercodierten Geheimnisses. Eine Vergleichseinheit ist eingerichtet ist, um das decodierte Geheimnis mit einer Kopie des Geheimnisses zu vergleichen, das in dem Token gespeichert ist, um die Authentizität eines Nutzers zu verifizieren. Dadurch stellt das Sicherheitstoken eine Abgleichfunktionalität auf einer Karte bereit.

Der vorliegenden Erfindung liegt nun die Aufgabe zugrunde, das eingangs beschriebene Problem einer widerrechtlichen Nutzung eines ID-Tokens zu verhindern.

Diese Aufgabe wird jeweils mit den Merkmalen der unabhängigen Patentansprüche gelöst. Ausführungsformen der Erfindung sind in den abhängigen Patentansprüchen angegeben. Sofern nicht ausdrücklich Gegenteiliges zum Ausdruck gebracht wird, können Ausführungsformen der Erfindung frei miteinander kombiniert werden.

Unter einem "ID-Token" wird hier insbesondere ein tragbares elektronisches Gerät verstanden, welches zumindest einen geschützten elektronischen Datenspeicher zur Speicherung von Attributen und eine Kommunikationsschnittstelle zum Auslesen der Attribute aufweist. Der Speicherbereich ist geschützt, um zu verhindern, dass das in dem Speicherbereich gespeicherte Attribut in unerlaubter Weise verändert oder ohne die dafür erforderliche Berechtigung ausgelesen wird. Mit anderen Worten kann auf den Speicherbereich nur dann zugegriffen werden, wenn eine hierzu erforderliche Zugriffberechtigung gegeben ist.

Insbesondere kann es sich bei dem ID-Token um einen USB-Stick handeln oder ein Dokument, insbesondere ein Wert- oder Sicherheitsdokument, beispielsweise in Form einer Chipkarte. Unter einem "Dokument" werden erfindungsgemäß papierbasierte und/oder kunststoffbasierte Dokumente verstanden, wie zum Beispiel elektronische Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, insbesondere eine Zugangskarte oder Signaturkarte, Zahlungsmittel, insbesondere Banknoten, Banckarten und Kreditkarten, Frachtbriefe oder sonstige Berechtigungsnachweise, in die ein Datenspeicher zur Speicherung zumindest eines Attributs integriert ist.

Bei dem ID-Token kann es sich um einen Hardwaretoken handeln oder um einen Softtoken, wenn dieser kryptografisch an einen Hardwaretoken, das heißt beispielsweise an ein sogenanntes Secure Element, gebunden ist. Insbesondere kann ein solcher kryptografisch an ein Secure Element gebundener Softtoken gemäß DE 10 2011 082 101 erzeugt werden.

Unter einem "Attribut" wird allgemein ein Datenwert, zum Beispiel eine Zahl oder ein Text, verstanden. Bei dem Attribut kann es sich um eine Angabe bezüglich der Identität eines Nutzers handeln, dem das ID-Token zugeordnet ist, insbesondere bezüglich dessen sogenannter digitaler Identität. Beispielsweise können Name, Vorname, Adresse des Nutzers Attribute darstellen. Unter einem "Attribut" werden hier insbesondere Daten verstanden, die den Nutzer des ID-Tokens oder das ID-Token selbst betreffen, insbesondere Personalisierungsdaten, wie zum Beispiel persönliche Daten des Nutzers, eine Gültigkeitsdauer oder den Herausgeber des ID-Tokens oder eine Zahlungsinformation, wie zum Beispiel Kreditkartendaten oder andere Daten für ein elektronisches Bezahlsystem. Ein Attribut kann auch Daten beinhalten, die zur Überprüfung der Berechtigung des Nutzers zur Inanspruchnahme eines bestimmten Online-Dienstes dienen, wie zum Beispiel das Alter des Nutzers, wenn dieser einen Onlinedienst in Anspruch nehmen möchte, der einer bestimmten Altersgruppe vorbehalten ist, oder ein anders Attribut, welches die Zugehörigkeit des Nutzers zu einer bestimmten Gruppe dokumentiert, welche zur Nutzung des Onlinedienstes berechtigt ist. Ein "Attribut" kann auch einen Datenwert bezeichnen, welcher eine Zugangsberechtigung zu einer zugriffsbeschränkten Sicherungsanlage umfasst. In diesem Zusammenhang kann das Attribut ebenfalls eine bestimmte Gruppenzugehörigkeit angeben, wobei der Zugriff auf die zugriffsbeschränkte Sicherungsanlage von der besagten Gruppenzugehörigkeit abhängt.

Unter einem "Lesegerät" wird hier ein elektronisches Gerät verstanden, welches einen Lesezugriff und auch einen Schreibzugriff auf das ID-Token ermöglicht, insbesondere ein Terminal, beispielsweise in Form eines sogenannten Chipkartenterminals. Das Lesegerät kann einen integralen Bestandteil eines Nutzer-Computersystems bilden oder als separate Komponente ausgeführt sein, beispielsweise als Peripheriegerät des Nutzer-Computersystems. Insbesondere kann es sich bei dem Lesegerät um ein sogenanntes Klasse 1, 2 oder 3 Chipkartenlesegerät handeln. Das Lesegerät kann mit einer kontaktlosen und/oder kontaktbehafteten Schnittstelle zum Datenaustausch mit einem ID-Token ausgestattet ist.

Unter einem "Mikrocontroller" oder System-on-a-Chip (SoC) wird hier ein Halbleiterchip verstanden, welcher zumindest einen Prozessor, eine Kommunikationsschnittstelle und einen Speicher umfasst.

Ein "geschützter Mikrocontroller" bezeichnet einen Mikrocontroller mit physikalisch beschränkten Zugriffsmöglichkeiten. Insbesondere wird hier unter einem geschützten Mikrocontroller ein Mikrocontroller mit genau einer Kommunikationsschnittstelle zur kontaktbehafteten Kommunikation mit externen Elementen verstanden, wobei die Kommunikationsschnittstelle genau einen Dateneingang und einen Datenausgang bereitstellt. Zudem mag ein geschützter Mikrocontroller zusätzliche Maßnahmen gegen Missbrauch aufweisen, insbesondere gegen unberechtigte Zugriffe auf Daten im Speicher des Mikrocontrollers. Beispielsweise umfasst ein geschützter Mikrocontroller Sensoren zur Überwachung des Zustands des Mikrocontrollers sowie von dessen Umgebung, um Abweichungen vom Normalbetrieb zu erkennen, welche auf Manipulationsversuche hinweisen können. Entsprechende Sensortypen umfassen beispielweise einen Taktfrequenzsensor, einen Temperatursensor, einen Spannungssensor, und/oder einen Lichtsensor. Taktfrequenzsensoren, Temperatursensoren und Spannungssensoren erfassen beispielweise Abweichungen der Taktfrequenz, Temperatur und/oder Spannung nach oben oder unten von einem vordefinierten Normalbereich. Zudem kann ein geschützter Mikrocontroller einen nichtflüchtigen elektronischen Speicher mit einem geschützten Speicherbereich umfassen.

Des Weiteren kann ein geschützter Mikrocontroller Mittel zur kryptographischen Datensicherung umfassen, wie beispielsweise einen Zufallszahlengenerator, einen Generator für kryptographische Schlüssel, einen Hashgenerator, ein Ver-/Entschlüsselungsmodul, ein Signaturmodul, Zertifikate, und/oder einen oder mehrere nicht migrierbare kryptographische Schlüssel, wie beispielsweise einen sogenannten Endorsement Key, Storage Root Key und/oder Attestation Identity Keys.

Unter einem "nichtflüchtigen elektronischen Speicher" wird hier ein Speicher zur Speicherung von Daten, insbesondere von Attributen, verstanden, der auch als Non-Volatile Memory (NVM) bezeichnet wird. Insbesondere kann es sich hierbei um ein EEPROM, beispielsweise ein Flash-EEPROM, kurz als Flash bezeichnet, handeln.

Unter einem "geschützten Speicherbereich" wird hier ein Bereich eines elektronischen Speichers verstanden, auf den ein Zugriff, das heißt ein Lesezugriff oder ein Schreibzugriff, von einem mit dem Speicher gekoppelten Prozessor nur dann ermöglicht wird, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln. Der Speicher kann so konfiguriert sein, dass ein Zugriff auf den geschützten Speicherbereich nur über den gekoppelten Prozessor möglich ist. Insbesondere wird unter einem "geschützten Speicherbereich" eines ID-Tokens ein elektronischer Speicher verstanden, in dem Daten gespeichert sind, wie zum Beispiel ein Attribut und/oder eine Datenstruktur, die aus dem elektronischen Speicher von einem Lesegerät nur dann ausgelesen, gelöscht oder geändert werden können, wenn sich das Lesegerät gegenüber dem ID-Token authentifiziert hat und/oder seine Berechtigung zum Lesen, Löschen und/oder Schreiben der betreffenden Daten gegenüber dem ID-Token nachgewiesen hat, beispielsweise mithilfe eines Berechtigungszertifikats, in dem solche Rechte des Lesegeräts spezifiziert sind. Beispielsweise kann es sich bei dem elektronischen Speicher um ein EEPROM, insbesondere ein Flash-EEPROM handeln.

Unter einem "Prozessor" wird hier eine Logikschaltung verstanden, die zur Ausführung von Programminstruktionen dient. Die Logikschaltung kann auf einem oder mehreren diskreten Bauelementen implementiert sein, insbesondere auf einem Chip.

Unter einer "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann, beispielsweise nach einem RFID- und/oder NFC-Standard.

Unter einer "Applikation" wird hier ohne Einschränkung jede Art von Computerprogramm verstanden, welches maschinenlesbare Instruktionen zur Steuerung einer Funktionalität des ID-Tokens umfasst.

Unter einem "Proxy" wird hier ein Schaltelement verstanden, welches dazu konfiguriert ist eine Datenverbindung zwischen einem Empfänger und einem Sender von Daten herzustellen und zu einer oder mehreren anderen Datenverbindungen umzuschalten, welche denselben Empfänger oder Sender mit einem anderen Sender oder Empfänger verbinden.

Unter einem "Sensor" wird hier ein Element zum Erfassen von Messdaten verstanden. Messdaten sind Daten, welche physikalische oder chemische Eigenschaften eines Messobjekts, wie beispielsweise Wärmemenge, Temperatur, Feuchtigkeit, Druck, Schallfeldgrößen, Helligkeit, Beschleunigung, pH-Wert, lonenstärke, elektrochemisches Potential, und/oder dessen stoffliche Beschaffenheit qualitativ oder quantitativ wiedergeben. Messdaten werden mittels physikalischer oder chemischer Effekte erfasst und in ein elektronisch weiterverarbeitbares elektrisches Signal umgeformt. Darüber hinaus umfassen Sensoren insbesondere auch Elemente zum Erfassen einer Informationseingabe, wie beispielweise eine Tastatur, Tastenfeld, Maus, Touchscreen und/oder Elemente zum Erfassen von Gesten.

Unter einer "verschlüsselten Ende-zu-Ende-Verbindung" wird hier eine Verbindung zwischen einem Sender und einem Empfänger mit einer Ende-zu-Ende-Verschlüsslung verstanden, bei der zu übertragende Daten vom Sender verschlüsselt und erst vom Empfänger wieder entschlüsselt werden. Die Verschlüsselung übertragener Daten erfolgt somit über alle Übertragungsstationen hinweg, sodass Zwischenstationen aufgrund der Verschlüsslung keine Kenntnis vom Inhalt der übertragenen Daten erlagen können. Die Verbindung wird durch die Verschlüsselung kryptografisch abgesichert, um ein Ausspähen und/oder eine Manipulation der Übertragung zu verhindern, wobei hierzu ein sogenanntes Secure-Messaging-Verfahren eingesetzt werden kann. Ein Verfahren zum Aufbau einer solchen verschlüsselten Ende-zu-Ende-Verbindung zwischen einem ID-Token und einem Lesegerät wird beispielsweise in der deutschen Patentanmeldung 10 2015 202 308.7 beschrieben.

Unter einem "Zertifikat" wird hier ein digitales Zertifikat verstanden, welches auch als Public-Key-Zertifikat bezeichnet wird. Bei einem Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Alternativ sind auch Zertifikate basierend auf zero-knowledge Kryptosystemen möglich. Beispielsweise kann das Zertifikat dem Standard X.509 oder einem anderen Standard entsprechen. Beispielsweise handelt es sich bei dem Zertifikat um ein Card Verifiable Certificate (CVC).

In dem Zertifikat kann spezifiziert sein, für welches Attribut oder welche Attribute des Nutzers, die in dem geschützten Speicherbereich des ID-Tokens gespeichert sind, ein Lesegerät zur Durchführung eines Lesezugriffs berechtigt ist. Ferner können auch die jeweiligen Schreibrechte für Attributspezifikationen oder Attribute in einem Zertifikat definiert sein. Ein solches Zertifikat wird auch als Berechtigungszertifikat bezeichnet. Desweiteren kann ein Zertifikat spezifizieren, ob eine Authentisierung mit den On-Chip-Sensoren durch das Terminal initiiert werden darf.

Eine "Application Protocol Data Unit" (APDU) ist eine Kommunikationseinheit einer Kommunikation zwischen einer Chipkarte und einer Chipkartenanwendung nach dem ISO 7816-Standard. Bei einer APDU handelt es sich um eine Kommunikationseinheit auf Anwendungsebene, was im OSI-Schichtenmodel der Schicht 7 entspricht. Es können Kommando-APDUs ("command APDUs") und Antwort-APDUs ("response APDUs") unterschieden werden. Kommando-APDUs übermitteln Kommandos an die Chipkarte, während die Antwort-APDUs die Antworten der Chipkarte auf entsprechende Kommandos übermitteln. Die Strukturen von Kommando-APDU und Antwort-APDU sind in der Norm ISO 7816-4 festgelegt. Eine Kommando-APDU besteht aus einem Kopf ("header") mit Kopfdaten und einem optionalen Rumpf ("body") mit Nutzdaten, d.h. Kommandos. Eine Antwort-APDU besteht aus einem optionalen Rumpf ("body") mit Nutzdaten, die Antwortdaten des Kommandos, und einem obligatorischen Abschluss ("trailer"). Der Abschluss gibt Auskunft über die erfolgreiche Abarbeitung des Kommandos oder die Art des Fehlers, der die Abarbeitung verhindert oder unterbrochen hat.

Im Falle von verschlüsselten APDUs sind die Nutzdaten jeweils verschlüsselt, wohingegen die Kopfdaten unverschlüsselt bleiben, um eine korrekte Zuordnung und Abarbeitung der APDUs zu gewährleisten.

Unter einer Kommunikation auf Basis eines "Master"/"Slave"-Verhältnisses zwischen zwei oder mehr Teilnehmern wird hier ein Datenaustausch verstanden, bei dem genau ein Teilnehmer die Rolle des Masters übernimmt und alle weiteren Teilnehmer die Rolle von Slaves übernehmen. Die Kommunikation erfolgt dabei unter Verwendung eines Frage-Antwort-Protokolls, bei welchem allein der Master als einziger Teilnehmer die Berechtigung hat eine Datenübermittlung von sich aus zu veranlassen, d.h. eine entsprechende Anfrage an einen der Slaves zu senden, wohingegen die Slaves lediglich auf Anfragen mit Antworten erwidern können, ohne aber die Möglichkeit zu besitzen von sich aus aktiv in die Kommunikation einzugreifen oder eine solche anzustoßen.

Unter einem "logischer Kanal" wird eine lokale Verbindung zwischen zwei Datenendeinrichtungen oder Netzwerkknoten verstanden, wobei ein logischer Kanal durch Kanaladressen in den übermittelten Datenpaketen realisiert wird. Jedem Kanal ist ein "Kontext" zugeordnet, dieser definiert einen Zustand und/oder eine Anwendung der Zieldatenendeinrichtung oder des Zielnetzwerkknotens.

In einem Aspekt betrifft die Erfindung ein ID-Token mit einem Sensor, einer Kommunikationsschnittstelle und einem ersten Mikrocontroller, wobei das ID-Token einen geschützten zweiten Mikrocontroller mit mindestens einer Mikrocontrollerkommunikationsschnittstelle umfasst, welcher in einer Aufnahme des ID-Tokens angeordnet ist, wobei die Mikrocontrollerkommunikationsschnittstelle einen Dateneingang und einen Datenausgang bereitstellt,
- wobei der Sensor dazu konfiguriert ist Messdaten zu erfassen,
- wobei der erste Mikrocontroller zum Datenaustausch mit der Mikrocontrollerkommunikationsschnittstelle des geschützten zweiten Mikrocontrollers, mit dem Sensor und mit der Kommunikationsschnittstelle des ID-Tokens verbunden ist und wobei der erste Mikrocontroller dazu konfiguriert ist über die Kommunikationsschnittstelle des ID-Token mit einem Lesegerät Daten auszutauschen,
- wobei der geschützte zweite Mikrocontroller eine erste und eine zweite Applikation umfasst,
- wobei die erste Applikation dazu konfiguriert ist, die Messdaten des Sensors mit Vergleichsdaten, welche in einem Speicher des zweiten Mikrocontrollers gespeichert sind, zu vergleichen und das Vergleichsergebnis an die zweite Applikation weiterzuleiten,
- wobei die zweite Applikation dazu konfiguriert ist, eine Verbindung mit dem Lesegerät herzustellen und durch ein Lesekommando des Lesegeräts spezifizierte Daten auszugeben,
- wobei der erste Mikrocontroller als Proxy dazu konfiguriert ist, zwischen der Erfassung der Messdaten durch den Sensor und einem Weiterleiten der erfassten Messdaten von dem Sensor an die erste Applikation des geschützten zweiten Mikrocontroller über dessen Mikrocontrollerkommunikationsschnittstelle einerseits und einem Weiterleiten von Mitteilungen zum Aufbau einer Verbindung zwischen der zweiten Applikation und dem Lesegerät und/oder einem Weiterleiten von APDUs über die Verbindung zwischen der zweiten Applikation und dem Lesegerät andererseits umzuschalten.

Ausführungsformen können den Vorteil haben, dass sie einen effektiven Schutz gegen widerrechtliche Nutzungen des ID-Tokens bieten. Zum einen bietet ein erfindungsgemäßes ID-Token die Möglichkeit das Vorliegen zusätzlicher Sicherheitsattribute mittels des Sensors zu prüfen und zum anderen erlaubt es die Verwendung eines geschützten Mikrocontrollers, der beispielsweise dazu konfiguriert ist verschlüsselt mit einem Lesegerät zu kommunizieren und zugleich aufgrund beschränkter Zugriffsmöglichkeit ein hohes Maß an Sicherheit bietet. Nach Ausführungsformen umfasst der Speicher des zweiten Mikrocontrollers einen geschützten Speicherbereich, in dem zumindest ein Attribut des ID Tokens gespeichert ist. Nach Ausführungsformen sind die Vergleichsdaten in dem geschützten Speicherbereich des Speichers des zweiten Mikrocontrollers gespeichert. Nach Ausführungsformen umfasst das ID-Token eine Mehrzahl von Sensoren.

Ausführungsformen können den Vorteil haben, dass durch die Verwendung eines in das ID-Token integrierten Sensors eine Manipulation des Sensors beispielsweise für einen Skimming-Angriff verhindert.

Der als Proxy konfigurierte erste Mikrocontroller erlaubt ein Umschalten zwischen einer Datenverbindung des geschützten zweiten Mikrocontrollers zu einem oder mehreren Sensoren des ID-Tokens und einer Datenverbindung des zweiten Mikrocontrollers zu dem Lesegerät. Nach Ausführungsformen weist der erste Mikrocontroller hierfür eine Mehrzahl von Kommunikationsschnittstellen auf, welche eine Mehrzahl von Dateneingängen und Datenausgängen bereitstellen.

Der Sensor bietet die Möglichkeit zusätzliche externe Sicherheitsattribute zur Authentisierung- und/oder Berechtigungsprüfung mit einzubeziehen. Diese Sicherheitsattribute können die Identität des Nutzers des ID-Tokens betreffen, beispielsweise im Fall eines Fingerabdrucksensors, oder Kenntnisse des Nutzers, wie beispielsweise ein PIN-Tastenfeld zur Eingabe einer nur dem Nutzer bekannten PIN, oder Umgebungsparameter, wie sie beispielsweise von einem Temperatursensor oder einem GPS-Empfänger bereitgestellt werden. Der Speicher des geschützten zweiten Mikrocontrollers umfasst Vergleichsdaten für die von den Sensoren in einem als zulässig vordefinierten Anwendungsszenario zu erfassenden Messdaten. Stimmen die erfassten Messdaten mit den Vergleichsdaten überein, wird vom Vorliegend eines zulässigen Anwendungsszenarios ausgegangen. Ein solches Anwendungsszenario ist beispielweise die Nutzung des ID-Tokens durch eine Person mit einer bestimmten Identität, durch eine Person mit bestimmten Kenntnissen und/oder eine Benutzung des ID-Tokens an einem bestimmten Ort.

Das ID-Token bzw. die beiden Applikationen des geschützten zweiten Mikrocontrollers können dazu konfiguriert sein, dem Lesegerät das Ergebnis der Vergleichsprüfung mitzuteilen und/oder angefragte Daten nur nach erfolgreicher Vergleichsprüfung zu übermitteln, bzw. empfangene Kommandos nur nach erfolgreicher Vergleichsprüfung auszuführen.

Nach Ausführungsformen ist die zweite Applikation dazu konfiguriert, eine Verbindung mit dem Lesegerät in Form einer verschlüsselten Ende-zu-Ende-Verbindung herzustellen und die durch ein Lesekommando des Lesegeräts spezifizierte Daten über die verschlüsselte Ende-zu-Ende-Verbindung auszugeben, wobei über die verschlüsselte Ende-zu-Ende-Verbindung verschlüsselte APDUs übertragen werden.

Ausführungsformen können den Vorteil haben, dass der Datenaustausch zwischen Lesegerät und ID-Token, insbesondere das Abfragen eines oder mehrere Attribute, effektiv gegen unberechtigte Zugriffe, wie beispielsweise Versuche eines Mitschneidens oder Abhörens, geschützt werden kann. Gleichzeitig ermöglicht die Konfiguration des ersten Mikrocontrollers als Proxy eine Abfrage von Messdaten des Sensors durch Umschalten der Datenverbindungen trotz der Verschlüsselung der über die verschlüsselte Ende-zu-Ende-Verbindung übertragenen Daten.

Nach Ausführungsformen ist der erste Mikrocontroller dazu konfiguriert:
- eine erste Anfrage des Lesegeräts zum Aufbau der Verbindung zwischen der zweiten Applikation und dem Lesegerät zu empfangen und zwischenzuspeichern,
- auf den Empfang der ersten Anfrage hin eine zweite Anfrage zur Erfassung der Messdaten an den Sensor zu senden,
- auf die zweite Anfrage hin die erfassten Messdaten vom Sensor zu empfangen und an die erste Applikation weiterzuleiten,
- die zwischengespeicherte erste Anfrage an die zweite Applikation weiterzuleiten.

Ausführungsformen können den Vorteil haben, dass bei einer Abfrage einer bestimmten Applikation, wie etwa der ersten Applikation, Messdaten von dem ersten Mikrocontroller vorsorglich angefragt werden, sodass sie dem geschützten zweiten Mikrocontroller im Bedarfsfall zur Verfügung stehen und die angefragte Applikation auf diese zurückgreifen kann trotz beschränkter Zugriffsmöglichkeiten auf den zweiten Mikrocontroller und einem von außen nicht einsehbaren verschlüsselten Datenaustauch mit dem anfragenden Lesegerät. Dies gilt selbst im Falle eines Betriebs des zweiten Mikrocontrollers als Slave gegenüber einem als Master betriebenen ersten Mikrocontroller. Nach Ausführungsformen handelt es sich bei der ersten Anfrage des Lesegeräts zum Aufbau der Verbindung um eine Anfrage zum Aufbau einer verschlüsselten Ende-zu-Ende-Verbindung.

Nach Ausführungsformen ist der erste Mikrocontroller dazu konfiguriert:
- eine im Zuge des Aufbaus der verschlüsselten Ende-zu-Ende-Verbindung von dem Lesegerät an die zweite Applikation gesendete unverschlüsselte Mitteilung zu empfangen, zwischenzuspeichern und zu analysieren,
- falls die Mitteilung eine Bezugnahme auf von dem Sensor erfasste Messdaten umfasst, eine Anfrage zur Erfassung der Messdaten an den Sensor zu senden,
- auf die Anfrage hin die erfassten Messdaten vom Sensor zu empfangen und an die erste Applikation weiterzuleiten,
- die zwischengespeicherte unverschlüsselte Mitteilung an die zweite Applikation weiterzuleiten.

Ausführungsformen können den Vorteil haben, dass Messdaten nur dann vorsorglich angefragt werden, wenn es Indizien gibt, dass diese in die Kommunikation über die herzustellende verschlüsselte Ende-zu-Ende-Verbindung tatsächlich einbezogen werden.

Nach Ausführungsformen ist die unverschlüsselte Mitteilung ein Zertifikat, welches das Lesegerät zur Prüfung der durch den Sensor erfassten Messdaten mittels der ersten Applikation berechtigt.

Ausführungsformen können den Vorteil haben, dass Messdaten nur dann vorsorglich angefragt werden, wenn ein anfragendes Lesegerät auch die Berechtigung besitzt auf diese Messdaten zuzugreifen. Ist dies nicht der Fall so erübrigt sich ein Bereitstellen der Messdaten, ob angefragt oder nicht.

Nach Ausführungsformen ist der erste Mikrocontroller dazu konfiguriert, alle im Zuge des Aufbaus der verschlüsselte Ende-zu-Ende-Verbindung vom Lesegerät an die zweite Applikation gesendeten Mitteilungen zu empfangen, zwischenzuspeichern und weiterzuleiten, wobei auf das Weiterleiten der Messdaten hin alle zwischengespeicherten Mitteilungen erneut an die zweite Applikation weitergeleitet werden.

Ausführungsformen können den Vorteil haben, dass bei einer Unterbrechung des Verbindungsaufbaus, dieser effizient wieder aufgenommen werden kann, selbst wenn der bisher erreichte Aufbaustatus durch die Unterbrechung verlorengegangen ist.

Nach Ausführungsformen ist der geschützte zweite Mikrocontroller dazu konfiguriert, eine Mehrzahl von logischen Kanälen zum Datenaustausch über die Mikrocontrollerkommunikationsschnittstelle bereitzustellen, wobei die Kommunikation über die verschlüsselte Ende-zu-Ende-Verbindung auf einem ersten logischen Kanal des zweiten Mikrocontroller erfolgt und wobei der erste Mikrocontroller dazu konfiguriert ist:
- eine über die verschlüsselte Ende-zu-Ende-Verbindung von dem Lesegerät an die zweite Applikation gesendete verschlüsselte APDU mit unverschlüsselten Kopfdaten und verschlüsselten Nutzdaten zu empfangen, zwischenzuspeichern und die Kopfdaten zu analysieren,
- falls die Kopfdaten eine Bezugnahme auf von dem Sensor erfasste Messdaten umfassen, eine Anfrage zur Erfassung der Messdaten an den Sensor zu senden,
- auf die Anfrage hin die erfassten Messdaten vom Sensor zu empfangen und auf einem zweiten logischen Kanal des zweiten Mikrocontrollers an die erste Applikation weiterzuleiten,
- die zwischengespeicherte verschlüsselte APDU auf dem ersten logischen Kanal an die zweite Applikation weiterzuleiten.

Ausführungsformen können den Vorteil haben, dass die Messdaten nur angefordert werden, wenn diese auch tatsächlich abgefragt werde. Zudem wird durch die Verwendung zweier logischer Kanäle gewährleistet, dass die aufgebaute verschlüsselte Ende-zu-Ende-Verbindung nicht unterbrochen wird, sondern beim Umschalten auf einen anderen Kanal fortbestehen kann, ohne die Übermittlung der Messdaten zu behindern. Zudem erlaubt die Analyse der Kopfdaten die Verschlüsselung aufrecht zu erhalten, wodurch die Sicherheit erhöht wird, es dem ersten Mikrocontroller aber dennoch ermöglicht wird eine Abfrage von Messdaten des Sensors zu erkennen. Nach Ausführungsformen wird die Datenübertragung über dem ersten logischen Kanal während der Übertragung der Messdaten auf dem zweiten logischen Kanal unterbrochen und nach Beendigung der Messdatenübertragung fortgesetzt, wobei der erste logische Kanal während der Unterbrechung jedoch bestehen bleibt. Das Umschalten wird dabei über den ersten Mikrocontroller gesteuert, der beispielsweise als Master fungiert, während der geschützte zweite Mikrocontroller die Rolle eines Slaves übernimmt.

Nach Ausführungsformen ist die mindestens eine Mikrocontrollerkommunikationsschnittstelle des geschützten zweiten Mikrocontrollers eine kontaktbehaftete Kommunikationsschnittstelle.

Ausführungsformen können den Vorteil haben, dass ein Abhören und/oder Mitschneiden von übertragenen Daten erschwer und die Sicherheit damit erhöht wird.

Nach Ausführungsformen umfasst der geschützte zweite Mikrocontroller genau eine Mikrocontrollerkommunikationsschnittstelle.

Ausführungsformen können den Vorteil haben, dass die physikalischen Zugriffmöglichkeiten auf den geschützten zweiten Mikrocontroller effizient minimiert werden und somit die Sicherheit erhöht wird.

Nach Ausführungsformen ist der erste Mikrocontroller dazu konfiguriert über die Kommunikationsschnittstelle des ID-Token kontaktlos mit einem Lesegerät Daten auszutauschen.

Ausführungsformen können den Vorteil haben, dass die Verwendung des ID-Tokens vereinfacht wird und es nicht erst mit dem Lesegerät in Kontakt gebracht werden muss. Damit kann insbesondere der Prüfungsvorgang des ID-Tokens beschleunigt werden, da das In-Kontakt-Bringen wegfällt. Zudem erlaubt dies das ID-Token ohne Einschränkungen so zu halten, dass eine die Sensoren zur Erfassung der Messdaten optimal ausgerichtet sind. Beispielsweise kann das ID-Token so gehalten werden, dass ein Fingerabdrucksensor des ID.-Token für den Nutzer mit seinen Fingern leicht erreichbar ist. Im Fall einer kontaktbehafteten Verbindung sind die Positionierungsmöglichkeiten des ID-Tokens demgegenüber durch den erforderlichen Kontakt begrenzt.

Nach Ausführungsformen ist der erste Mikrocontroller dazu konfiguriert über die Kommunikationsschnittstelle des ID-Token kontaktbehaftet mit einem Lesegerät Daten auszutauschen.

Ausführungsformen können den Vorteil haben, dass ein Abhören und/oder Mitschneiden von übertragenen Daten erschwer und die Sicherheit damit erhöht wird.

Nach Ausführungsformen umfasst die zweite Applikation die erste Applikation.

Ausführungsformen können den Vorteil haben, dass die Funktionalität der ersten und zweiten Applikation auf dem geschützten zweiten Mikrocontroller in einer gemeinsamen Applikation zusammengefasst bzw. integriert sind. Die zweite Applikation umfasst in diesem Fall nativ die Funktionalität der ersten Applikation oder umgedreht, womit keine gesonderte Implementierung dieser Funktionalität in einer gesonderten, eigenständigen Applikation notwendig ist.

Nach Ausführungsformen sind die erste und zweite Applikation gesonderten, eigenständigen Applikationen. Ausführungsformen können den Vorteil haben, dass so alle Applikationen, die weitere Merkmale anfordern wollen, diese Anfragen an eine zentrale Applikation, d.h. die erste Applikation, weiterleiten und somit auch nur diese eine zentrale Applikation die Verwaltung und Überprüfung übernimmt.

Nach Ausführungsformen handelt es sich bei den Messdaten um ein oder mehrere biometrische Merkmale, eine PIN, Beschleunigungsdaten, GPS-Koordinaten und/oder Temperaturdaten.

Ausführungsformen können den Vorteil haben, dass durch biometrische Merkmale, wie etwa Fingerabdrücke oder ein Frequenzmuster der Stimme, die Identität des tatsächlichen Nutzers des ID-Tokens geprüft werden kann. Eine PIN prüft, ob der Nutzer über das notwendige Wissen zur rechtmäßigen Benutzung des ID-Tokens verfügt. Beschleunigungsdaten können beispielsweise zur Erkennung des Nutzers anhand von Bewegungsmustern dienen. Über die GPS-Koordinaten kann der Verwendungsort des ID Token bestimmt werden. Mittels der Temperatur lassen sich Umgebungsbedingungen überprüfen, um beispielsweis den tatsächlichen Ort der Verwendung des ID-Tokens zu bestimmen. Zudem lässt sich beispielsweise in Kombination mit einem Fingerabdrucksensor testen, ob bei der Erfassung der Messdaten tatsächlich ein Finger auf dem Sensor angeordnet ist.

Nach Ausführungsformen weist das ID-Token eine Mehrzahl unterschiedlicher Sensoren zur Erfassung einer Mehrzahl unterschiedlicher Messdaten auf, mit denen der erste Mikrocontroller zum Datenaustausch verbunden ist, wobei die erste Applikation dazu konfiguriert ist, die Messdaten jedes Sensors mit Vergleichsdaten, welche in einem Speicher des zweiten Mikrocontrollers gespeichert sind, zu vergleichen und die Vergleichsergebnisse an die zweite Applikation weiterzuleiten.

Ausführungsformen können den Vorteil haben, dass ein komplexes Verwendungsszenario definiert werden kann, in welchem eine Benutzung des ID-Tokens zulässig ist. Zur Bestätigung einer Identität und/oder Berechtigung mittels des ID-Tokens sind im Falle eines solchen komplexen Verwendungsszenarios müssen beispielsweise eine Mehrzahl mittels unterschiedlicher Sensoren erfasster unterschiedlicher Messdaten korrekt sein, d.h. mit vordefinierten Vergleichsdaten übereinstimmen. Zudem lassen sich abstufte Sicherheitslevel definieren. Für einen einfachen Zugang zu einem Gebäude und/oder Computersystem mag die Kenntnis einer PIN ausreichend sein, für eine rechtsverbindliche digitale Signatur mag diese Kenntnis in Verbindung einer Bestätigung der Identität des Nutzers über ein oder mehrere biometrische Merkmale notwendig sein.

Nach Ausführungsformen ist der erste Mikrocontroller als Master und der geschützte zweite Mikrocontroller als Slave konfiguriert.

Ausführungsformen können den Vorteil haben, dass sie die Sicherheit erhöhen, da der sicherheitstechnisch sensible zweite Mikrocontroller nicht von sich aktiv in die Kommunikation eingreifen kann. Der zweite Mikrocontroller kann daher nicht dahingehend manipuliert werden von sich aus unzulässig Daten zu übermitteln.

Nach Ausführungsformen ist der zweite Mikrocontroller physikalisch geschützt durch eines oder mehrerer der folgenden Elemente: einen Taktfrequenzsensor, einen Temperatursensor, einen Spannungssensor, und/oder einen Lichtsensor.

Ausführungsformen können den Vorteil haben, dass diese Sensoren eine effektive Möglichkeit zur Überwachung des Zustands des zweiten Mikrocontrollers sowie von dessen Umgebung bieten und es somit erlauben physische Manipulationsversuche frühzeitig zu erkennen.

Nach Ausführungsformen ist der zweite Mikrocontroller kryptographisch geschützt durch eines oder mehrerer der folgenden Elemente: einen Zufallszahlengenerator, einen Generator für kryptographische Schlüssel, einen Hashgenerator, ein Ver-/Entschlüsselungsmodul, ein Signaturmodul, ein oder mehrere Zertifikate und/oder einen oder mehrere nicht migrierbare kryptographische Schlüssel.

Ausführungsformen können den Vorteil haben, dass sowohl die Datenspeicherung, als auch die Datenübertragung mittels des zweiten Mikrocontrollers hohen kryptographischen Sicherheitsansprüchen genügen.

Nach Ausführungsformen ist die Mikrocontrollerkommunikationsschnittstelle des geschützten zweiten Mikrocontrollers mit dem ersten Mikrocontroller fest verdrahtet.

Ausführungsformen können den Vorteil haben, dass ein Ausbau des geschützten zweiten Mikrocontrollers aus dem ID-Token zu Manipulationszwecken erschwert wird. Insbesondere kann die Verdrahtung derart ausgestaltet sein, dass ein zerstörungsfreier Ausbau, bei dem die Mikrocontrollerkommunikationsschnittstelle funktionsfähig bleibt, verhindert wird.

Nach Ausführungsformen ist der geschützte zweite Mikrocontroller als austauschbares Modul und die Aufnahme des ID-Tokens als Steckverbindung für das Modul konfiguriert, wobei die Mikrocontrollerkommunikationsschnittstelle des geschützten zweiten Mikrocontrollers lösbar mit dem ersten Mikrocontroller kontaktiert ist.

Ausführungsformen können den Vorteil haben, dass das ID-Token als Plattform zur Verwendung mit verschiedenen geschützten zweiten Mikrocontrollern verwendet werden kann. Dies erhöht insbesondere die Kompatibilität mit Weiterentwicklungen des geschützten Mikrocontrollers und erlaubt zudem eine standarisierte Massenproduktion.

Nach Ausführungsformen weist das ID-Token eine Ausgabeeinrichtung auf, mit der der erste Mikrocontroller zum Datenaustausch verbunden ist.

Ausführungsformen können den Vorteil haben, dass sie eine Bedienung des ID-Tokens vereinfachen und Anweisungen zur Verwendung der Sensoren sowie Informationen über den Benutzungszustand des ID-Tokens bereitstellen. Dies ist insbesondere von Vorteil bei einer Mehrzahl von Sensoren. Entsprechende Ausgabeeinrichtung können beispielsweise ein Display oder LEDs sein. Insbesondere kann der Sensor auch in einer Ausgabeeinrichtung integriert sein, wie beispielsweise bei einem druckempfindlichen Display.

In einem weiteren Aspekt betrifft die Erfindung ein System, welches ein ID-Token nach einem der vorhergehenden Ansprüche und ein Lesegerät mit einer Kommunikationsschnittstelle zum Datenaustausch mit der Kommunikationsschnittstelle des ID-Tokens umfasst, wobei das Lesegerät dazu konfiguriert ist eine Verbindung mit der zweiten Applikation des geschützten zweiten Mikrocontroller aufzubauen und über die aufgebaute Verbindung APDUs an die zweite Applikation zu versenden und/oder von der zweiten Applikation zu empfangen.

Ausführungsformen können den Vorteil haben, dass ein System zur effizienten und sicheren Prüfung einer Zugangsberechtigung, zur sicheren Abwickelung von Zahlungsvorgängen und/oder zur sicheren digitalen Signatur elektronischer Dokumente bereitgestellt wird. Hierzu ist das Lesegerät beispielsweise Teil einer Einrichtung zur Zugangskontrolle, eines Terminals und/oder eines Nutzer-Computersystems.

In einem weiteren Aspekt betrifft die Erfindung ein Verfahren zur Überprüfung von Messdaten des Sensors eines ID-Tokens nach einem der Vorrichtungsansprüche mittels des geschützten zweiten Mikrocontrollers, wobei das Verfahren umfasst:
o Übermitteln einer Anfrage zum Aufbau einer Verbindung zwischen dem Lesegerät und der zweiten Applikation des geschützten zweiten Mikrocontrollers:
   - Empfang der Anfrage durch den ersten Mikrocontroller über die Kommunikationsschnittstelle des ID-Tokens,
   - Weiterleiten der Anfrage durch den ersten Mikrocontroller an die zweite Applikation des geschützten zweiten Mikrocontrollers über die Mikrocontrollerkommunikationsschnittstelle des geschützten zweiten Mikrocontrollers,
o Aufbau der Verbindung zwischen dem Lesegerät und der zweiten Applikation:
   - Austausch Mitteilungen zum Aufbau der Verbindung zwischen dem Lesegerät und der zweiten Applikation über die Kommunikationsschnittstelle des ID-Token, den ersten Mikrocontroller und die Mikrocontrollerkommunikationsschnittstelle des geschützten zweiten Mikrocontrollers,
o Austausch von APDUs über die Verbindung zwischen dem Lesegerät und der zweiten Applikation:
   - Empfang einer Kommando-APDU durch den ersten Mikrocontroller über die Kommunikationsschnittstelle des ID-Tokens, wobei die Kommando-APDU das Vergleichsergebnis des von der ersten Applikation ausgeführten Vergleichs von durch den Sensor erfassten Messdaten mit Vergleichsdaten abfragt,
   - Weiterleiten der Kommando-APDU durch den ersten Mikrocontroller an die zweite Applikation über die Mikrocontrollerkommunikationsschnittstelle des geschützten zweiten Mikrocontrollers,
   - Erstellen einer Antwort-APDU auf die empfangene Kommando-APDU durch die zweite Applikation unter Verwendung des von der ersten Applikation empfangenen Vergleichsergebnisses,
   - Empfang der Antwort-APDU durch den ersten Mikrocontroller,
   - Weiterleiten der Antwort-APDU durch den ersten Mikrocontroller an das Lesegerät über die Kommunikationsschnittstelle des ID-Tokens
o Bereitstellen des Vergleichsergebnisses für die erfassten Messdaten:
   - Senden einer Anfrage zur Erfassung der Messdaten an den Sensor durch den ersten Mikrocontroller,
   - Erfassen der Messdaten durch den Sensor,
   - Empfang der erfassten Messdaten durch den ersten Mikrocontroller,
   - Weiterleiten der erfassten Messdaten durch den ersten Mikrocontroller an die erste Applikation über die Mikrocontrollerkommunikationsschnittstelle des geschützten zweiten Mikrocontrollers,
   - Empfang der erfassten Messdaten durch die erste Applikation und Vergleich mit den gespeicherten Vergleichsdaten,
   - Weiterleiten des Vergleichsergebnisses an die zweite Applikation.

Ausführungsformen können den Vorteil haben, dass sie ein Verfahren zur Überprüfung von Messdaten des Sensors eines ID-Tokens bereitstellen, welches zugleich einen effektiven Schutz gegen widerrechtliche Nutzungen des ID-Tokens bietet.

Nach Ausführungsformen ist die Verbindung, welche zwischen dem Lesegerät und der zweiten Applikation aufgebaut wird, eine verschlüsselte Ende-zu-Ende-Verbindung, wobei über die verschlüsselten Ende-zu-Ende-Verbindung verschlüsselte APDUs in Form von verschlüsselten Kommando-APDUs und verschlüsselten Antwort APDUs ausgetauscht werden.

Ausführungsformen können den Vorteil haben, dass sie eine gegen Abhörund/oder Mitschnittversuche gesicherte Datenübertragung bereitstellen. Nach Ausführungsformen werden zum Aufbau der verschlüsselten Ende-zu-Ende-Verbindung unverschlüsselte Mitteilungen zwischen dem Lesegerät und der zweiten Applikation über die Kommunikationsschnittstelle des ID-Token ausgetauscht.

Nach Ausführungsformen wird die Anfrage zum Aufbau der Verbindung zwischen dem Lesegerät und der zweiten Applikation des geschützten zweiten Mikrocontrollers von dem ersten Mikrocontroller zwischengespeichert, wobei das Bereitstellen des Vergleichsergebnisses für die erfassten Messdaten auf den Empfang der Anfrage hin erfolgt und die zwischengespeicherte Anfrage auf das Weiterleiten der erfassten Messdaten durch den ersten Mikrocontroller hin an die zweite Applikation weitergeleitet wird.

Ausführungsformen können den Vorteil haben, dass Messdaten vorsorglich bereitgestellt werden, sodass der geschützte zweite Mikrocontroller bei Bedarf über diese verfügen bzw. auf diese zugreifen kann.

Nach Ausführungsformen werden durch den ersten Mikrocontroller vom Lesegeräts empfangene unverschlüsselte Mitteilungen zum Aufbau der Verbindung zwischengespeichert, wobei der erste Mikrocontroller die zwischengespeicherten unverschlüsselten Mitteilungen analysiert, auf ein Erfassen einer Bezugnahme auf von dem Sensor erfasste Messdaten in einer unverschlüsselten Mitteilung hin das Weiterleiten der entsprechenden Mitteilung unterbricht und das Bereitstellen des Vergleichsergebnisses für die erfassten Messdaten veranlasst, wobei bereits weitergeleitete zwischengespeicherten Mitteilungen auf das Weiterleiten der erfassten Messdaten durch den ersten Mikrocontroller hin an die zweite Applikation erneut weitergeleitet werden und das unterbrochene Weiterleiten fortgesetzt wird.

Ausführungsformen können den Vorteil haben, dass Messdaten nur dann vorsorglich bereitgestellt werden, wenn absehbar ist, dass diese mit einer gewissen Wahrscheinlichkeit auch tatsächlich benötigt werden. Beispielsweise handelt es sich bei der analysierten Mitteilung um ein Zertifikat des Lesegeräts und die Messdaten werden nur bereitgestellt, wenn das Lesegerät auch über die notwendige Berechtigung verfügt auf diese Messdaten zuzugreifen.

Nach Ausführungsformen erfolgt das Senden und Empfangen verschlüsselter APDUs durch den geschützten zweiten Mikrocontroller auf einem ersten logischen Kanal, wobei der erste Mikrocontroller die unverschlüsselten Kopfdaten empfangener Kommando-APDUs analysiert, auf ein Erfassen einer Bezugnahme auf von dem Sensor erfasste Messdaten in den unverschlüsselten Kopfdaten einer verschlüsselten Kommando-APDU hin das Weiterleiten der entsprechenden Kommando-APDU unterbricht und das Bereitstellen des Vergleichsergebnisses für die erfassten Messdaten veranlasst, wobei die erfassten Messdaten auf einem zweiten logischen Kanal an die erste Applikation weitergeleitet werden, wobei auf das Weiterleiten der erfassten Messdaten durch den ersten Mikrocontroller über den zweiten logischen Kanal hin das unterbrochene Weiterleiten auf dem ersten logischen Kanal fortgesetzt wird.

Ausführungsformen können den Vorteil haben, dass Messdaten nur bei Bedarf bereitgestellt werden. Wobei eine effiziente Bereitstellung aber trotz der Verschlüsselung der APDUs und der beschränkten Zugriffsmöglichkeiten auf den geschützten zweiten Mikrocontroller ermöglicht wird.

Nach Ausführungsformen ist jedem der logischen Kanäle ein Kontext des geschützten zweiten Mikrocontrollers zugeordnet und der zweite Mikrocontroller dazu konfiguriert zwischen den einzelnen Kontexten umzuschalten, in Abhängigkeit davon, über welchen logischen Kanal die Kommunikation mit dem ersten Mikrocontroller erfolgt.

Ausführungsformen der Erfindung könnten den Vorteil haben, dass die verschlüsselte Ende-zu-Ende-Verbindung zwischen dem Lesegerät und der zweiten Applikation aufrechterhalten werden kann, während die Messdaten abgefragt, übertragen und verglichen werden.

Im Folgenden werden bevorzugt Ausführungsformen der Erfindung anhand der Zeichnungen näher erläutert. Es zeigen:
- Figur 1: ein schematisches Blockdiagramm eines beispielhaften ID-Token gemäß der vorliegenden Erfindung,
- Figur 2: ein Flussdiagramm für ein erstes beispielhaftes Verfahren zum Betrieb eines erfindungsgemäßen ID-Tokens,
- Figur 3: ein Flussdiagramm für ein zweites beispielhaftes Verfahren zum Betrieb eines erfindungsgemäßen ID-Tokens und
- Figur 4: ein Flussdiagramm für ein drittes beispielhaftes Verfahren zum Betrieb eines erfindungsgemäßen ID-Tokens.

Im Folgenden werden einander ähnliche Elemente mit gleichen Bezugszeichen gekennzeichnet.

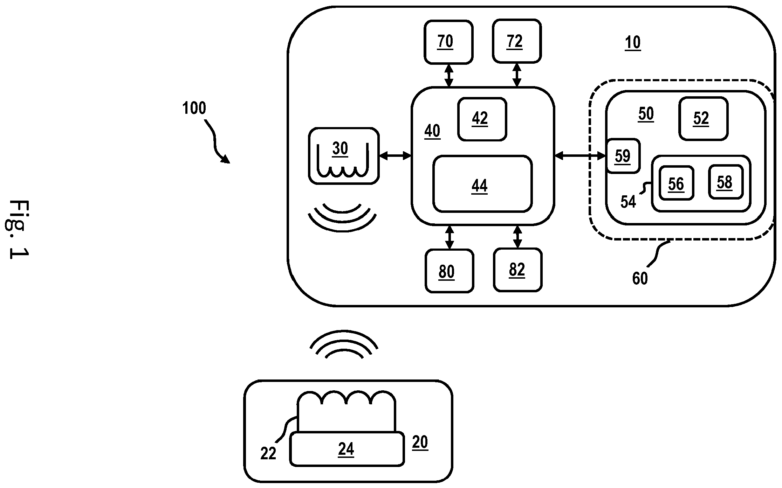

Die Figur 1 zeigt ein schematisches Blockdiagramm eines beispielhaften, erfindungsgemäßen ID-Tokens 10 in Kombination mit einem Lesegerät 20, welche zusammen ein erfindungsgemäßes System 100 bilden.

Das ID-Token 10 umfasst einen ersten und einen zweiten Mikrocontroller 40, 50. Der erste Mikrocontroller 40 ist dazu konfiguriert mittels eines Antennenmoduls 30, welches eine Antenne umfasst, kontaktlos mit dem Lesegerät 20 zu kommunizieren, d.h. Daten auszutauschen. Hierzu ist das Lesegerät 20 mit einer Antenne 22 versehen. Der erste Mikrocontroller 40 umfasst einen Prozessor 42 und einen Speicher 44. Der Speicher 44 umfasst maschinenlesbare Instruktionen, die, wenn sie vom Prozessor 42 ausgeführt werden, den ersten Mikrocontroller 40 dazu veranlassen die Kommunikation des geschützten zweiten Mikrocontrollers 50 mit dem Lesegerät 20 sowie den Sensoren 70, 72 und den Ausgabeeinrichtungen 80, 82 zu steuern. Ferner umfasst das ID-Token 10 die bereits erwähnten Sensoren 70, 72, bei denen es sich beispielweise um einen Fingerabdrucksensor 70 und ein PIN-Tastenfeld 72 handelt. Nach Ausführungsformen kann es sich auch um andere bekannte Arten von Sensoren handeln, wie beispielsweise ein Mikrophon, ein Gyroskop, einen Beschleunigungssensor, einen GPS-Empfänger und/oder ein Thermometer. Nach Ausführungsformen können diese Sensoren aber auch zusätzlich zu den beiden Sensoren 70, 72 vorgesehen sein. Zudem umfasst das ID-Token 10 Ausgabeeinrichtungen, wie beispielsweise ein Display 80 und LEDs 82. Das Display 80 mag beispielweise vom ersten Mikrocontroller 40 derart angesteuert werden, dass es den Nutzer des ID-Tokens 10 dazu auffordern, einen oder mehrere Finger auf den Fingerabdrucksensor 70 zu legen oder eine PIN über das PIN-Tastenfeld 72 einzugeben. Die LEDs 82 mögen dem Nutzer signalisieren, dass die Sensoren 70 und/oder 72 einsatzbereit sind und/oder dass ein Fingerabdruck vollständig erfasst bzw. ein PIN vollständig eingegeben wurde und/oder dass ein Fehler aufgetreten ist. Dies kann beispielsweise über verschiedene Farben angezeigt werden, in denen die LEDs 82 leuchten. Nach Ausführungsformen können das ID-Token 10 und insbesondere die LEDs 82 auch dazu konfiguriert sein anzuzeigen, wenn das Ergebnis des durch die erste Applikation 56 des geschützten zweiten Mikrocontrollers 50 ausgeführten Datenvergleichs positiv ist.

Ferner umfasst das ID-Token 10 eine Aufnahme 60 für einen zweiten Mikrocontroller, in der ein geschützter zweiter Mikrocontroller 50 angeordnet ist. Der zweite Mikrocontroller 50 ist zum einen dadurch geschützt, dass er nur eine einzige kontaktbehaftete Mikrocontrollerkommunikationsschnittstelle 59 zum Kommunizieren bzw. Datenaustausch mit externen Elementen, d.h. den ersten Mikrocontroller 40, aufweist, wobei die Mikrocontrollerkommunikationsschnittstelle 59 genau einen Dateneingang und einen Datenausgang aufweist. Zum anderen mag der zweite Mikrocontroller 50 physikalisch und kryptographisch geschützt sein. Beispielweise umfasst der Mikrocontroller 50 nach Ausführungsformen einen Taktfrequenzsensor, einen Temperatursensor, einen Spannungssensor, und/oder einen Lichtsensor. Des Weiteren umfasst der Mikrocontroller 50 zur kryptographischen Sicherung nach Ausführungsformen beispielsweise einen Zufallszahlengenerator, einen Generator für kryptographische Schlüssel, einen Hashgenerator, ein Ver-/Entschlüsselungsmodul, ein Signaturmodul, ein oder mehrere Zertifikate und/oder einen oder mehrere nicht migrierbare kryptographische Schlüssel. Zudem umfasst der geschützte zweite Mikrocontroller 50 einen Prozessor 52 und einen Speicher 54 mit einer ersten und einer zweiten Applikation 56, 58. Außerdem umfasst der Speicher 54 die Vergleichsdaten (nicht gezeigt) für die Messdaten der Sensoren 70, 72. Die Vergleichsdaten mögen beispielweise Fingerabdrücke oder charakteristische Merkmalsspezifikationen von Fingerabdrücken eines oder mehrere dem ID-Token 10 zugeordneter Nutzer sein. Weiterhin mögen die Vergleichswerte eine oder mehrere PINs umfassen. Die PINs mögen nach Ausführungsformen als Chiffrate auf dem Speicher 54 gespeichert sein, sodass es notwendig ist entweder die erfassten Messdaten zum Vergleich mit den Chiffraten ebenfalls zu chiffrieren oder aber die abgespeicherten Chiffrate zu dechiffrieren. Bei dem Speicher 54 mag es sich nach Ausführungsformen um einen geschützten Speicher handeln. Auf den Speicher 54 kann beispielsweise nur dann zugegriffen werden, wenn eine hierzu erforderliche Zugriffberechtigung gegeben ist. Zudem kann nach Ausführungsformen nur über den Prozessor 52 auf den Speicher 54 zugegriffen werden.

Die erste Applikation 56 umfasst maschinenlesbare Instruktionen, die den zweiten Mikrocontroller 50, wenn sie von dem Prozessor 52 ausführt werden, dazu veranlassen die erfassten Messdaten der Sensoren 70, 72, die von dem ersten Mikrocontroller 40 an die erste Applikation 56 weitergleitet wurden, mit den im Speicher 54 gespeicherten Vergleichswerten zu vergleichen. Die Vergleichsergebnisse werden von der ersten Applikation 56 über eine Inter-Applet-Kommunikation (IAC) an die zweite Applikation 58 übermittelt. Nach Ausführungsformen kann die erste Applikation 56 auch in der zweiten Applikation 58 integriert sein. Die zweite Applikation 58 ist dazu konfiguriert eine verschlüsselte Ende-zu-Ende-Verbindung mit dem Lesegerät 20 aufzubauen. Über die verschlüsselte Ende-zu-Ende-Verbindung werden verschlüsselte APDUs zwischen dem Lesegerät 20 und der zweiten Applikation 58 ausgetauscht. Dabei schickt das Lesegerät 20 beispielsweise Kommando-APDUs an die zweite Applikation 58, auf welche diese jeweils mit einer entsprechenden Antwort-APDU antwortet.

Weiter mag das ID-Token 10 eine Energiequelle (nicht gezeigt) umfassen, welche zur Energieversorgung zumindest der Sensoren 70, 72 und der Anzeigeeinrichtungen 80, 82 konfiguriert ist. Bei der Energiequelle kann es sich beispielsweise um eine Batterie oder eine Vorrichtung zum "Energieernten" (energy harvesting) handeln. Hierzu können beispielsweise piezoelektrische Kristalle, thermoelektrische Generatoren oder Ähnliches verwendet werden.

Das Lesegerät 20 umfasst eine kryptografische Schaltung 24, welche dazu konfiguriert ist, mittels einer Antenne 22 mit dem ersten Mikrocontroller 40 des ID-Tokens 10 kontaktlos zu kommunizieren. Beispielsweise kann es sich bei dem Lesegerät 20 um ein RIFD-Lesegerät handeln. Dabei kann beispielsweise die Kommunikation zwischen dem Lesegerät 20 und dem ID-Token 10 entsprechend der Norm ISO 14443 drahtlos mit einer Frequenz von 13,56 MHz erfolgen.

Das Lesegerät 20 kann beispielsweise Teil eines Zugangskontrollsystems sein, wobei ein Nutzer mittels des ID-Tokens 10 eine Zugangskontrollvorrichtung in einen Freigabezustand schalten muss, um Zugang zu erhalten. Hierzu ist beispielsweise in dem geschützten Speicher 54 des geschützten zweiten Mikrocontrollers 50 ein Attribut hinterlegt, welches von dem Lesegerät 20 auszulesen und mit einem Vergleichsattribut zu vergleichen ist. Nur bei Übereinstimmung des aus dem geschützten Speicherbereich 54 ausgelesenen Attributs und dem Vergleichsattribut des Lesegeräts 20 wird die Zugangskontrollvorrichtung in einen Freigabezustand geschaltet. Zudem ist eine Identifikation des Nutzers mittels eines biometrischen Merkmals wie einem Fingerabdruck und/oder die Kenntnis einer PIN als Zugangsvoraussetzung notwendig. Hierzu muss der Nutzer über den Fingerabdrucksensor 70 seinen Fingerabdruck erfassen lassen und/oder über das PIN-Tastenfeld 72 eine PIN eingeben. Die von den Sensoren 70, 72 erfassten Messdaten werden über den ersten Mikrocontroller 40 an die erste Applikation 56 des geschützten zweiten Mikrocontrollers 50 weitergeleitet. Die erste Applikation 56 wird von dem Prozessor 52 ausgeführt und vergleicht die erfassten Messdaten mit den im geschützten Speicher 54 gespeicherten Vergleichsdaten. Das Vergleichsergebnis wird der zweiten Applikation 58 von der ersten Applikation 56 durch eine Inter-Applet-Kommunikation übermittelt und über die verschlüsselte Ende-zu-Ende-Verbindung an das Lesegerät 20 weitergleitet. Nur bei einem positiven Vergleichsergebnis wird die Zugangskontrollvorrichtung in einen Freigabezustand geschaltet. Nach Ausführungsformen wird dem Lesegerät 20 das Vergleichsergebnis nicht mitgeteilt, vielmehr ist die zweite Applikation 58 derart konfiguriert, dass das von dem Lesegerät 20 angefragte Attribut nur unter der Voraussetzung an das Lesegerät 20 übermittelt, dass das Vergleichsergebnis positiv ist.

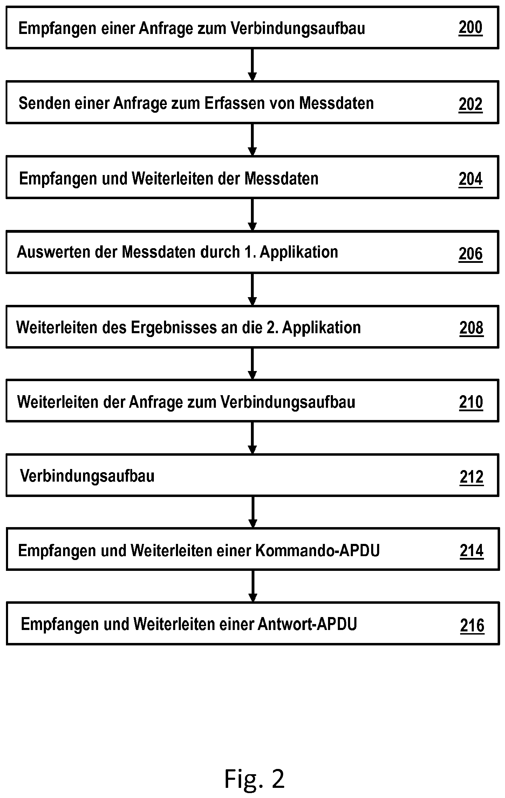

Die Figur 2 zeigt ein Flussdiagramm für ein erstes beispielhaftes Verfahren zum Betrieb des erfindungsgemäßen ID-Tokens 10 aus Figur 1.

In Block 200 empfängt der erste Mikrocontroller 40 mittels des Antennenmoduls 30 eine an die zweite Applikation 58 des geschützten zweiten Mikrocontrollers 50 gerichtete erste Anfrage zum Aufbau einer verschlüsselten Ende-zu-Ende-Verbindung. Die empfangene Anfrage wird von dem ersten Mikrocontroller 40 zwischengespeichert und deren Weiterleiten unterbrochen. Auf den Empfang der ersten Anfrage hin sendet der erste Mikrocontroller 40 in Block 202 eine zweite Anfrage zum Erfassen von Messdaten an den Fingerabdrucksensor 70 und/oder das PIN-Tastenfeld 72. Der Nutzer wird beispielweise über das Display 80 aufgefordert einen Finger auf dem Fingerabdrucksensor 70 anzuordnen und/oder eine PIN über das PIN-Tastenfeld 72 einzugeben. Die entsprechenden Messdaten werden von den Sensoren 70, 72 erfasst und in Block 204 an den ersten Mikrocontroller 40 übertragen, der diese über die eine Mikrocontrollerkommunikationsschnittstelle 59 an die erste Applikation 56 weiterleitet. In Block 206 vergleicht die erste Applikation 56 die erfassten Messdaten mit den im Speicher 54 gespeicherten Vergleichsdaten. Das Vergleichsergebnis wird in Block 208 von der ersten Applikation 56 an die zweite Applikation 58 des geschützten zweiten Mikrocontrollers 50, beispielsweise durch eine Inter-Applet-Kommunikation, übertragen und dieser so zur Verfügung gestellt. Die Übertragung mag direkt nach Beendigung des Vergleichs erfolgen oder die erste Applikation 56 mag die Vergleichsergebnisse zwischenspeichern und der zweiten Applikation 58 bei Bedarf, z.B. auf eine entsprechende Anfrage hin übermitteln. Diesem Verfahren folgend wird das Erfassen, Weiterleiten und Verarbeiten von Messdaten also stets ausgeführt, wenn das Lesegerät 20 den geschützten zweiten Mikrocontroller 50 auszulesen versucht, d.h. einen Verbindungsaufbau mit der zweiten Applikation 58 initiiert. Dies ist der Fall, ungeachtet dessen ob oder welche der erfassten Messdaten später tatsächlich im Zuge der Kommunikation zwischen dem Lesegerät 20 und der zweiten Applikation 58 benötigt werden.

Auf das Weiterleiten der Messdaten durch den ersten Mikrocontroller 40 hin wird in Block 210 die erste Anfrage zum Aufbau der verschlüsselten Ende-zu Ende-Verbindung von dem ersten Mikrocontroller 40 an die zweite Applikation 58 weitergleitet. Der erste Mikrocontroller 40 ist dabei als Proxy konfiguriert, der zwischen dem Weiterleiten der ersten Anfrage und dem Weiterleiten von Messdaten umschaltet und somit den Datenstrom aus verschieden voneinander physisch getrennten Datenquellen, d.h. dem Lesegerät 20 und den Sensoren 70, 72, zum geschützten zweiten Mikrocontroller 50 steuert. In Block 212 erfolgt der Aufbau der verschlüsselten Ende-zu Ende-Verbindung beispielsweise durch den Austausch von Zertifikaten und/oder kryptographischen Schlüsseln zwischen dem Lesegerät 20 und der zweiten Applikation 58. Der Verbindungsaufbau erfolgt beispielweise gemäß dem in der deutschen Patentanmeldung 10 2015 202 308.7 beschrieben Protokoll. Nach Aufbau der verschlüsselten Ende-zu Ende-Verbindung werden über diese verschlüsselte APDUs zwischen dem Lesegerät 20 und dem zweiten Applikation 58 versandt. Beispielsweise wird in Block 214 eine verschlüsselte Kommando-APDU von dem Lesegerät 20 an die zweite Applikation 58 versandt, die auf ihrem Übermittlungsweg von dem ersten Mikrocontroller 40 empfangen und weitergeleitet wird. Diese verschlüsselte Kommando-APDU mag das Vergleichsergebnis für die erfassten Sensordaten abfragen und/oder ein Attribut abfragen, welches nur auf ein positives Vergleichsergebnis hin ausgegeben wird. In Block 216 wird eine von der zweiten Applikation 58 als Antwort auf die Kommando-APDU unter Verwendung der Vergleichsergebnisse erzeugte Antwort-APDU, welche beispielsweise die Vergleichsergebnisse und/oder ein abgefragtes Attribut beinhaltet, auf ihrem Übertragungsweg vom ersten Mikrocontroller 40 empfangen und an das Lesegerät 20 weitergeleitet.

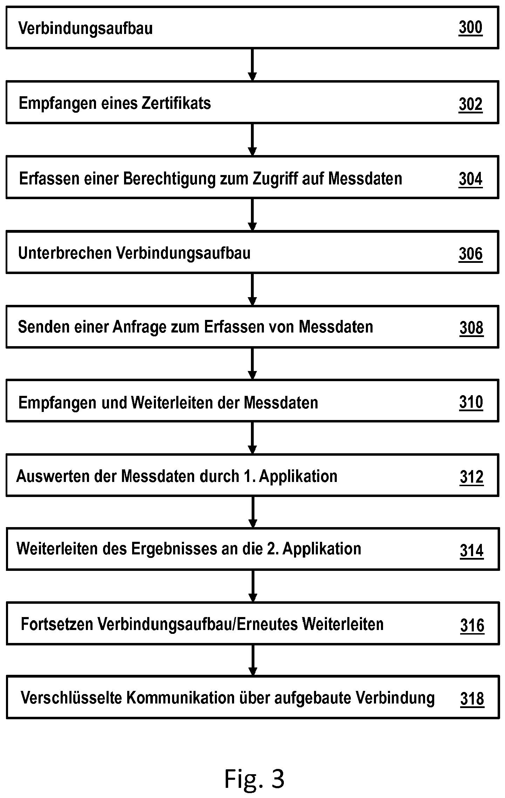

Die Figur 3 zeigt ein Flussdiagramm für ein zweites beispielhaftes Verfahren zum Betrieb des erfindungsgemäßen ID-Tokens 10 aus Figur 1.

In Block 300 erfolgt der Aufbau der verschlüsselten Ende-zu Ende-Verbindung beispielsweise durch den Austausch von Zertifikaten und/oder kryptographischen Schlüsseln zwischen dem Lesegerät 20 und der zweiten Applikation 58. Die vom Lesegerät 20 an die zweite Applikation 58 gesendeten Mitteilungen und deren Antworten werden dabei von dem ersten Mikrocontroller 40, der diese empfängt und weiterleitet, zwischengespeichert und analysiert. Hierbei wird Beispielsweise nach bestimmten vordefinierten Schlüsselbegriffen oder -funktionalitäten gesucht, die im Bezug stehen zu den Messdaten der Sensoren 70, 72. Beispielsweise wird in Block 302 durch den ersten Mikrocontroller 40 ein Zertifikat von dem Lesegerät 20 empfangen. Der Inhalt dieses Zertifikats wird analysiert und falls dieser einen Bezug zu den Messdaten der Sensoren 70, 72 umfasst, wird dieser Bezug in Block 304 erfasst. Bei einem solchen Bezug kann es sich beispielsweise um eine Berechtigung handeln auf die entsprechenden Messdaten zuzugreifen. Wird keine Bezugnahme erfasst, wird der Verbindungsaufbau durch Weiterleiten der analysierten Mitteilung fortgesetzt, andernfalls wird das Weiterleiten vorläufig ausgesetzt und der Verbindungsaufbau somit in Block 306 unterbrochen. Selbst bei einem Fortsetzen des Verbindungsaufbaus bleiben die analysierten Mitteilungen nach Ausführungsformen bis zum Abschluss des Verbindungsaufbaus auf dem ersten Mikrocontroller 40 zwischengespeichert. Bei der analysierten Mitteilung handelt es sich beispielsweise um ein Zertifikat des Lesegeräts 20.

Auf die Unterbrechung des Verbindungsaufbaus hin erfolgt Erfassen, Weiterleiten, Verarbeiten und Bereitstellen der Messdaten, auf welche das analysierte Zertifikat Bezug nimmt. Die Blöcke 308 bis 314, welche das Erfassen, Weiterleiten, Verarbeiten und Bereitstellen der Messdaten der Sensoren 70,72 betreffen, sind analog zu den Blöcken 202 bis 208 des Verfahrens gemäß Figur 2. Somit wird die eine Kommunikationsschnittstelle 59 des zweiten Mikrocontrollers 50 zum Übertragen der Messdaten verwendet, während die Übertragung von Mitteilungen zum Aufbau der verschlüsselten Ende-zu-Ende-Verbindung ausgesetzt ist. Je nach Inhalt der Bezugnahme werden Messdaten des Fingerabdrucksensors 70 und/oder des PIN-Tastenfelds 72 erfasst.

Auf das Weiterleiten der erfassten Messdaten durch den ersten Mikrocontroller 40 in Block 310 hin wird der ausgesetzte Verbindungsaufbau in Block 316 fortgesetzt. Hierzu ist es nach Ausführungsformen notwendig, die bis dato vom ersten Mikrocontroller 40 weitergeleiteten und noch auf diesem gespeicherten Mitteilungen erneut weiterzuleiten. Insbesondere wird das in Block 306 unterbrochene Weiterleiten des analysierten Zertifikats fortgesetzt. Nach Aufbau der verschlüsselten Ende-zu-Ende-Verbindung werden in Block 318 verschlüsselte APDUs zwischen dem Lesegerät 20 und der zweiten Applikation 58 ausgetauscht. Dies umfasst beispielsweise das Empfangen und Senden von Kommando- und Antwort-APDUs analog zu den Blöcken 214 und 216 der Figur 2.

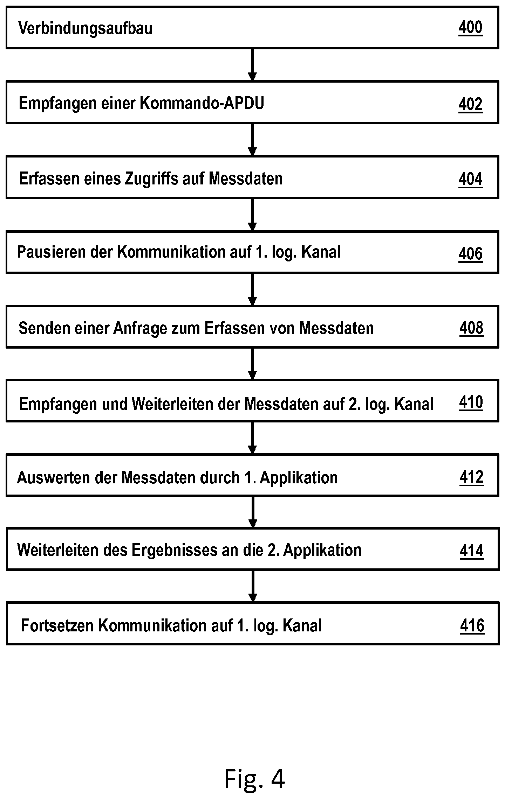

Die Figur 4 zeigt ein Flussdiagramm für ein drittes beispielhaftes Verfahren zum Betrieb des erfindungsgemäßen ID-Tokens 10 aus Figur 1.

In Block 400 wird eine verschlüsselte Ende-zu-Ende-Verbindung zwischen dem Lesegerät 20 und der zweiten Applikation 58 aufgebaut. Das Übertragen verschlüsselter APDUs an den geschützten zweiten Mikrocontroller 50 erfolgt über dessen kontaktbehaftete Mikrocontrollerkommunikationsschnittstelle 59 auf einem ersten logischen Kanal. Dem ersten logischen Kanal ist ein erster Kontext des geschützten zweiten Mikrocontrollers 50 zugeordnet. In Block 402 wird eine vom Lesegerät 20 gesendete verschlüsselte Kommando-APDU vom ersten Mikrocontroller 40 empfangen. Der erste Mikrocontroller 40 hat zwar keinen Zugriff auf die verschlüsselten Nutzdaten der Kommando-APDU, aber auf deren unverschlüsselte Kopfdaten. Diese Kopfdaten werden beispielsweise mit einer vordefinierten Suchmaske analysiert. In Block 404 wird eine Bezugnahme auf Messdaten der Sensoren 70, 72 erfasst, beispielsweise ein Zugriff auf die entsprechenden Messdaten. Daraufhin wird in Block 406 die Kommunikation über den ersten logischen Kanal pausiert. Die analysierte und auf dem ersten Mikrocontroller 40 zwischengespeicherte Kommando-APDU wird vorerst nicht weitergeleitet.

Der erste Mikrocontroller 40 schaltet um und stellt eine Verbindung zwischen dem Fingerabdrucksensor 70 und/oder dem PIN-Tastenfeld 72 einerseits und der ersten Applikation 56 des geschützten zweiten Mikrocontrollers 50 anderseits her, indem er Messdaten anfragt und auf einem zweiten logischen Kanal an den geschützten zweiten Mikrocontroller 50 überträgt. Dem zweiten logischen Kanal ist ein zweiter Kontext des geschützten zweiten Mikrocontrollers 50 zugeordnet. Der geschützten zweite Mikrocontroller 50 ist dazu konfiguriert in Abhängigkeit davon, über welchen logische Kanal kommuniziert wird, zwischen den verschiedenen Kontexten zu wechseln. Bei der Kommunikation zwischen den Mikrocontrollern 40, 50 agiert der erste Mikrocontroller 40 als Master, der geschützte zweite Mikrocontroller 50 als Slave. Die Blöcke 408 bis 414, welche das Erfassen, Weiterleiten, Verarbeiten und Bereitstellen der Messdaten der Sensoren 70, 72 betreffen, sind analog zu den Blöcken 202 bis 208 des Verfahrens gemäß Figur 2.

Auf das Weiterleiten der erfassten Messdaten mittels des zweiten logischen Kanals in Block 410 hin wechselt der erste Mikrocontroller 40 in Block 416 zurück auf den pausierten ersten logischen Kanal und setzt die verschlüsselte Kommunikation fort, indem die zwischengespeicherte Kommando-APDU an die zweite Applikation 58 weitergeleitet wird. Auf die Kommando-APDU antwortet die zweite Applikation 58 beispielsweise mit einer Antwort-APDU analog zu Block 216 der Figur 2, welche von dem ersten Mikrocontroller 40 empfangen und über die Antenne 30 an das Lesegerät 20 weitergeleitet wird.

### Bezugszeichenliste

- 10: ID-Token
- 20: Lesegerät
- 22: Antenne
- 24: kryptographische Schaltung
- 30: Antennenmodul
- 40: erster Mikrocontroller
- 42: erster Prozessor
- 44: erster Speicher
- 50: zweiter geschützter Mikrocontroller
- 52: zweiter Prozessor
- 54: zweiter Speicher
- 56: erste Applikation
- 58: zweite Applikation
- 59: Kommunikationsschnittstelle
- 60: Aufnahme
- 70: Fingerabdrucksensor
- 72: PIN-Tastenfeld
- 80: Display
- 82: LEDs
- 100: System

## Patentansprüche

1. ID-Token (10) mit einem Sensor (70, 72), einer Kommunikationsschnittstelle (30) und einem ersten Mikrocontroller (40), wobei das ID-Token (10) einen geschützten zweiten Mikrocontroller (50) mit mindestens einer Mikrocontrollerkommunikationsschnittstelle (59) umfasst, welcher in einer Aufnahme (60) des ID-Tokens (10) angeordnet ist, wobei die Mikrocontrollerkommunikationsschnittstelle (59) einen Dateneingang und einen Datenausgang bereitstellt,
• wobei der Sensor (70, 72) dazu konfiguriert ist Messdaten zu erfassen,
• wobei der erste Mikrocontroller (40) zum Datenaustausch mit der Mikrocontrollerkommunikationsschnittstelle (59) des geschützten zweiten Mikrocontrollers (50), mit dem Sensor (70, 72) und mit der Kommunikationsschnittstelle (30) des ID-Tokens (10) verbunden ist und wobei der erste Mikrocontroller (40) dazu konfiguriert ist über die Kommunikationsschnittstelle (30) des ID-Token (10) mit einem Lesegerät (20) Daten auszutauschen,
• wobei der geschützte zweite Mikrocontroller (50) eine erste und eine zweite Applikation (56, 58) umfasst,
• wobei die erste Applikation (56) dazu konfiguriert ist, die Messdaten des Sensors (70, 72) mit Vergleichsdaten, welche in einem Speicher (54) des zweiten Mikrocontrollers (50) gespeichert sind, zu vergleichen und das Vergleichsergebnis an die zweite Applikation (58) weiterzuleiten,
• wobei die zweite Applikation (58) dazu konfiguriert ist, eine Verbindung mit dem Lesegerät (20) in Form einer verschlüsselten Ende-zu-Ende-Verbindung herzustellen und durch ein Lesekommando des Lesegeräts (20) spezifizierte Daten auszugeben, wobei die durch ein Lesekommando des Lesegeräts (20) spezifizierten Daten über die verschlüsselte Ende-zu-Ende-Verbindung ausgegeben werden, wobei über die verschlüsselte Ende-zu-Ende-Verbindung verschlüsselte APDUs übertragen werden,
• wobei der erste Mikrocontroller (40) als Proxy dazu konfiguriert ist, zwischen der Erfassung der Messdaten durch den Sensor (70, 72) und einem Weiterleiten der erfassten Messdaten von dem Sensor (70, 72) an die erste Applikation (56) des geschützten zweiten Mikrocontroller (50) über dessen Mikrocontrollerkommunikationsschnittstelle (59) einerseits und einem Weiterleiten von Mitteilungen zum Aufbau einer Verbindung zwischen der zweiten Applikation (58) und dem Lesegerät (20) und/oder einem Weiterleiten von APDUs über die Verbindung zwischen der zweiten Applikation (58) und dem Lesegerät (20) andererseits umzuschalten,
wobei der erste Mikrocontroller (40) dazu konfiguriert ist, alle im Zuge des Aufbaus der verschlüsselte Ende-zu-Ende-Verbindung vom Lesegerät (20) an die zweite Applikation (58) gesendeten Mitteilungen zu empfangen, zwischenzuspeichern und weiterzuleiten, wobei der erste Mikrocontroller (40) ferner dazu konfiguriert ist:
• im Zuge des Aufbaus der verschlüsselten Ende-zu-Ende-Verbindung von dem Lesegerät (20) an die zweite Applikation (58) gesendete, von dem ersten Mikrocontroller (40) empfangene und zwischengespeicherte unverschlüsselte Mitteilungen zu analysieren,
• falls eine unverschlüsselte Mitteilung eine Bezugnahme auf die von dem Sensor (70, 72) erfassten Messdaten umfasst, das Weiterleiten der entsprechenden unverschlüsselten Mitteilung zu unterbrechen und eine Anfrage zur Erfassung der Messdaten an den Sensor (70, 72) zu senden,
• auf die Anfrage hin die erfassten Messdaten vom Sensor (70, 72) zu empfangen und an die erste Applikation (56) zum Veranlassen eines Bereitstellens eines Vergleichsergebnisses für die erfassten Messdaten durch die erste Applikation (56) für die zweite Applikation (58) weiterzuleiten,
• auf das Weiterleiten der Messdaten hin alle bereits weitergeleiteten zwischengespeicherten Mitteilungen erneut an die zweite Applikation (58) weiterzuleiten,
• das unterbrochene Weiterleiten fortzusetzten und die zwischengespeicherte unverschlüsselte Mitteilung an die zweite Applikation (58) weiterzuleiten.

2. ID-Token (10) nach einem der vorhergehenden Ansprüche, wobei die mindestens eine Mikrocontrollerkommunikationsschnittstelle (59) des geschützten zweiten Mikrocontrollers (50) eine kontaktbehaftete Kommunikationsschnittstelle (59) ist und/oder
wobei der geschützte zweite Mikrocontroller (50) genau eine Mikrocontrollerkommunikationsschnittstelle (59) umfasst.

3. ID-Token (10) nach einem der vorhergehenden Ansprüche, wobei der erste Mikrocontroller (40) dazu konfiguriert ist, über die Kommunikationsschnittstelle (30) des ID-Token (10) kontaktlos mit einem Lesegerät (20) Daten auszutauschen, oder wobei der erste Mikrocontroller (40) dazu konfiguriert ist, über die Kommunikationsschnittstelle (30) des ID-Token (10) kontaktbehaftet mit einem Lesegerät (20) Daten auszutauschen.

4. ID-Token (10) nach einem der vorhergehenden Ansprüche, wobei es sich bei den Messdaten um ein oder mehrere biometrische Merkmale, eine PIN, Beschleunigungsdaten, GPS-Koordinaten und/oder Temperaturdaten handelt, und/oder wobei das ID-Token (10) eine Mehrzahl unterschiedlicher Sensoren zur Erfassung einer Mehrzahl unterschiedlicher Messdaten aufweist, mit denen der erste Mikrocontroller (40) zum Datenaustausch verbunden ist, wobei die erste Applikation (56) dazu konfiguriert ist, die Messdaten jedes Sensors (70, 72) mit Vergleichsdaten, welche in einem Speicher (54) des zweiten Mikrocontrollers (50) gespeichert sind, zu vergleichen und die Vergleichsergebnisse an die zweite Applikation (58) weiterzuleiten.

5. ID-Token (10) nach einem der vorhergehenden Ansprüche, wobei der erste Mikrocontroller (40) als Master und der geschützte zweite Mikrocontroller (50) als Slave konfiguriert ist.

6. ID-Token (10) nach einem der vorhergehenden Ansprüche, wobei der zweite Mikrocontroller (50) physikalisch geschützt ist durch eines oder mehrerer der folgenden Elemente: einen Taktfrequenzsensor, einen Temperatursensor, einen Spannungssensor, und/oder einen Lichtsensor, und/oder
wobei der zweite Mikrocontroller (50) kryptographisch geschützt ist durch eines oder mehrerer der folgenden Elemente: einen Zufallszahlengenerator, einen Generator für kryptographische Schlüssel, einen Hashgenerator, ein Ver-/Entschlüsselungsmodul, ein Signaturmodul, ein oder mehrere Zertifikate und/oder einen oder mehrere nicht migrierbare kryptographische Schlüssel.

7. ID-Token (10) nach einem der vorhergehenden Ansprüche, wobei die Mikrocontrollerkommunikationsschnittstelle (59) des geschützten zweiten Mikrocontrollers (50) mit dem ersten Mikrocontroller (40) fest verdrahtet ist oder
wobei der geschützte zweite Mikrocontroller (50) als austauschbares Modul und die Aufnahme (60) des ID-Tokens (10) als Steckverbindung für das Modul konfiguriert ist, wobei die Mikrocontrollerkommunikationsschnittstelle (59) des geschützten zweiten Mikrocontrollers (50) lösbar mit dem ersten Mikrocontroller (40) kontaktiert ist.

8. ID-Token (10) nach einem der vorhergehenden Ansprüche, wobei das ID-Token (10) eine Ausgabeeinrichtung (80,82) aufweist, mit der der erste Mikrocontroller (40) zum Datenaustausch verbunden ist.

9. System (100), welches ein ID-Token (10) nach einem der vorhergehenden Ansprüche und ein Lesegerät (20) mit einer Kommunikationsschnittstelle (22) zum Datenaustausch mit der Kommunikationsschnittstelle (30) des ID-Tokens (10) umfasst, wobei das Lesegerät (20) dazu konfiguriert ist eine verschlüsselte Ende-zu-Ende-Verbindung mit der zweiten Applikation (58) des geschützten zweiten Mikrocontroller (50) aufzubauen und über die aufgebaute verschlüsselte Ende-zu-Ende-Verbindung verschlüsselte APDUs an die zweite Applikation (58) zu versenden und/oder von der zweiten Applikation (58) zu empfangen.

10. Verfahren zur Überprüfung von Messdaten des Sensors (70, 72) eines ID-Tokens (10) nach einem der Ansprüche 1 bis 8 mittels des geschützten zweiten Mikrocontrollers (50), wobei das Verfahren umfasst:
∘ Übermitteln einer Anfrage zum Aufbau einer Verbindung zwischen dem Lesegerät (20) und der zweiten Applikation (58) des geschützten zweiten Mikrocontrollers (50):
• Empfang der Anfrage durch den ersten Mikrocontroller (40) über die Kommunikationsschnittstelle (30) des ID-Tokens (10),
• Weiterleiten der Anfrage durch den ersten Mikrocontroller (40) an die zweite Applikation (58) des geschützten zweiten Mikrocontrollers (50) über die Mikrocontrollerkommunikationsschnittstelle (59) des geschützten zweiten Mikrocontrollers (50),
∘ Aufbau der Verbindung zwischen dem Lesegerät (20) und der zweiten Applikation (58):
• Austausch von Mitteilungen zum Aufbau der Verbindung zwischen dem Lesegerät (20) und der zweiten Applikation (58) über die Kommunikationsschnittstelle (30) des ID-Tokens (10), den ersten Mikrocontroller (40) und die Mikrocontrollerkommunikationsschnittstelle (59) des geschützten zweiten Mikrocontrollers (50),
∘ Austausch von APDUs über die Verbindung zwischen dem Lesegerät (20) und der zweiten Applikation (58):
• Empfang einer Kommando-APDU durch den ersten Mikrocontroller (40) über die Kommunikationsschnittstelle (30) des ID-Tokens (10), wobei die Kommando-APDU das Vergleichsergebnis des von der ersten Applikation (56) ausgeführten Vergleichs von durch den Sensor (70, 72) erfassten Messdaten mit Vergleichsdaten abfragt,
• Weiterleiten der Kommando-APDU durch den ersten Mikrocontroller (40) an die zweite Applikation (58) über die Mikrocontrollerkommunikationsschnittstelle (59) des geschützten zweiten Mikrocontrollers (50),
• Erstellen einer Antwort-APDU auf die empfangene Kommando-APDU durch die zweite Applikation (58) unter Verwendung des von der ersten Applikation (56) empfangenen Vergleichsergebnisses,
• Empfang der Antwort-APDU durch den ersten Mikrocontroller (40),
• Weiterleiten der Antwort-APDU durch den ersten Mikrocontroller (40) an das Lesegerät (20) über die Kommunikationsschnittstelle (30) des ID-Tokens (10)
∘ Bereitstellen des Vergleichsergebnisses für die erfassten Messdaten:
• Senden einer Anfrage zur Erfassung der Messdaten an den Sensor (70, 72) durch den ersten Mikrocontroller (40),
• Erfassen der Messdaten durch den Sensor (70, 72),
• Empfang der erfassten Messdaten durch den ersten Mikrocontroller (40),
• Weiterleiten der erfassten Messdaten durch den ersten Mikrocontroller (40) an die erste Applikation (56) über die Mikrocontrollerkommunikationsschnittstelle (59) des geschützten zweiten Mikrocontrollers (50),
• Empfang der erfassten Messdaten durch die erste Applikation (56) und Vergleich mit den gespeicherten Vergleichsdaten,
• Weiterleiten des Vergleichsergebnisses an die zweite Applikation (58),
wobei durch den ersten Mikrocontroller (40) vom Lesegeräts (20) empfangene unverschlüsselte Mitteilungen zum Aufbau der Verbindung zwischengespeichert werden, wobei der erste Mikrocontroller (40) die zwischengespeicherten unverschlüsselten Mitteilungen analysiert, auf ein Erfassen einer Bezugnahme auf die von dem Sensor (70, 72) erfassten Messdaten in einer unverschlüsselten Mitteilung hin das Weiterleiten der entsprechenden unverschlüsselten Mitteilung unterbricht und das Bereitstellen des Vergleichsergebnisses für die erfassten Messdaten veranlasst, wobei bereits weitergeleitete zwischengespeicherte Mitteilungen auf das Weiterleiten der erfassten Messdaten durch den ersten Mikrocontroller (40) hin an die zweite Applikation (58) erneut weitergeleitet werden und das unterbrochene Weiterleiten fortgesetzt wird,
wobei die Verbindung, welche zwischen dem Lesegerät (20) und der zweiten Applikation (58) aufgebaut wird, eine verschlüsselte Ende-zu-Ende-Verbindung ist, wobei über die verschlüsselten Ende-zu-Ende-Verbindung verschlüsselte APDUs in Form von verschlüsselten Kommando-APDUs und verschlüsselten Antwort APDUs ausgetauscht werden.

## Claims

1. An ID token (10), comprising a sensor (70, 72), a communication interface (30), and a first microcontroller (40), the ID token (10) comprising a protected second microcontroller (50) including at least one microcontroller communication interface (59), which is arranged in a holder (60) of the ID token (10), the microcontroller communication interface (59) providing a data input and a data output,
• the sensor (70, 72) being configured to sense measurement data,
• the first microcontroller (40), for the data exchange with the microcontroller communication interface (59) of the protected second microcontroller (50), being connected to the sensor (70, 72) and to the communication interface (30) of the ID token (10), and the first microcontroller (40) being configured to exchange data with a reading device (20) via the communication interface (30) of the ID token (10),
• the protected second microcontroller (50) including a first and a second application (56, 58),
• the first application (56) being configured to compare the measurement data of the sensor (70, 72) to comparison data stored in a memory (54) of the second microcontroller (50) and to forward the comparison result to the second application (58),
• the second application (58) being configured to establish a connection to the reading device (20) in the form of an encrypted end-to-end connection and to output data specified by a read command of the reading device (20), the data specified by a read command of the reading device (20) being output via the encrypted end-to-end connection, encrypted APDUs being transmitted via the encrypted end-to-end connection,
• the first microcontroller (40) being configured as a proxy for switching between sensing of the measurement data by the sensor (70, 72) and forwarding the sensed measurement data from the sensor (70, 72) to the first application (56) of the protected second microcontroller (50) via the microcontroller communication interface (59) thereof on the one hand, and forwarding notifications for establishing a connection between the second application (58) and the reading device (20) and/or forwarding APDUs via the connection between the second application (58) and the reading device (20) on the other hand,
wherein the first microcontroller (40) is configured to receive, temporarily store, and forward all notifications sent from the reading device (20) to the second application (58) during the course of the establishment of the encrypted end-to-end connection, the first microcontroller (40) furthermore being configured
• to analyze temporarily stored unencrypted notifications sent from the reading device (20) to the second application (58) and received by the first microcontroller (40) during the course of the establishment of the encrypted end-to-end connection;
• if an unencrypted notification includes a reference to the measurement data sensed by the sensor (70, 72), to interrupt the forwarding of the corresponding unencrypted notification, and to send a request for sensing the measurement data to the sensor (70, 72);
• in response to the request, to receive the sensed measurement data from the sensor (70, 72) and to forward it to the first application (56) to prompt a provision of a comparison result for the sensed measurement data by the first application (56) to the second application (58);
• in response to the forwarding of the measurement data, to forward all already forwarded, temporarily stored notifications to the second application (58) again; and
• to continue the interrupted forwarding, and to forward the temporarily stored unencrypted notification to the second application (58).

2. The ID token (10) according to any one of the preceding claims, wherein the at least one microcontroller communication interface (59) of the protected second microcontroller (50) is a contact-based communication interface (59), and/or wherein the protected second microcontroller (50) comprises exactly one microcontroller communication interface (59).

3. The ID token (10) according to any one of the preceding claims, wherein the first microcontroller (40) is configured to exchange data contactlessly with a reading device (20) via the communication interface (30) of the ID token (10), or wherein the first microcontroller (40) is configured to exchange data in a contact-based manner with the reading device (20) via the communication interface (30) of the ID token (10).

4. The ID token (10) according to any one of the preceding claims, wherein the measurement data involves one or more biometric features, a PIN, acceleration data, GPS coordinates and/or temperature data, and/or wherein the ID token (10) comprises a plurality of different sensors for sensing a plurality of different measurement data, to which the first microcontroller (40) is connected for data exchange, the first application (56) being configured to compare the measurement data of each sensor (70, 72) to comparison data stored in a memory (54) of the second microcontroller (50) and to forward the comparison results to the second application (58).

5. The ID token (10) according to any one of the preceding claims, wherein the first microcontroller (40) is configured as a master, and the protected second microcontroller (50) is configured as a slave.

6. The ID token (10) according to any one of the preceding claims, wherein the second microcontroller (50) is physically protected by one or more of the following elements: a clock frequency sensor, a temperature sensor, a voltage sensor, and/or a light sensor, and/or
wherein the second microcontroller (50) is cryptographically protected by one or more of the following elements: a random number generator, a generator for cryptographic keys, a hash generator, an encryption/decryption module, a signature module, one or more certificates and/or one or more non-migratable cryptographic keys.

7. The ID token (10) according to any one of the preceding claims, wherein the microcontroller communication interface (59) of the protected second microcontroller (50) is hard-wired to the first microcontroller (40), or
wherein the protected second microcontroller (50) is configured as an exchangeable module, and the holder (60) of the ID token (10) is configured as a plug-in connection for the module, the microcontroller communication interface (59) of the protected second microcontroller (50) being releasably contacted with the first microcontroller (40).

8. The ID token (10) according to any one of the preceding claims, wherein the ID token (10) comprises an output device (80, 82) to which the first microcontroller (40) is connected for data exchange.

9. A system (100), comprising an ID token (10) according to any one of the preceding claims and a reading device (20) including a communication interface (22) for the data exchange with the communication interface (30) of the ID token (10), the reading device (20) being configured to establish an encrypted end-to-end connection to the second application (58) of the protected second microcontroller (50), and to send encrypted APDUs to the second application (58) and/or to receive encrypted APDUs from the second application (58) via the established encrypted end-to-end connection.

10. A method for checking measurement data of the sensor (70, 72) of an ID token (10) according to any one of claims 1 to 8 by means of the protected second microcontroller (50), the method comprising:
∘ transmitting a request for the establishment of a connection between the reading device (20) and the second application (58) of the protected second microcontroller (50);
• receiving the request by the first microcontroller (40) via the communication interface (30) of the ID token (10);
• forwarding the request by the first microcontroller (40) to the second application (58) of the protected second microcontroller (50) via the microcontroller communication interface (59) of the protected second microcontroller (50);
∘ establishing the connection between the reading device (20) and the second application (58);
• exchanging notifications for the establishment of the connection between the reading device (20) and the second application (58) via the communication interface (30) of the ID token (10), the first microcontroller (40) and the microcontroller communication interface (59) of the protected second microcontroller (50);
∘ exchanging APDUs via the connection between the reading device (20) and the second application (58);
• receiving a command APDU by the first microcontroller (40) via the communication interface (30) of the ID token (10), the command APDU querying the comparison result of the comparison, carried out by the first application (56), of measurement data sensed by the sensor (70, 72) to comparison data;
• forwarding the command APDU by the first microcontroller (40) to the second application (58) via the microcontroller communication interface (59) of the protected second microcontroller (50);
• creating a response APDU to the received command APDU by the second application (58), using the comparison result received from the first application (56);
• receiving the response APDU by the first microcontroller (40);
• forwarding the response APDU by the first microcontroller (40) to the reading device (20) via the communication interface (30) of the ID token (10);
∘ providing the comparison result for the sensed measurement data;
• sending a request for the sensing of measurement data to the sensor (70, 72) by the first microcontroller (40);
• sensing the measurement data by the sensor (70, 72);
• receiving the sensed measurement data by the first microcontroller (40);
• forwarding the sensed measurement data by the first microcontroller (40) to the first application (56) via the microcontroller communication interface (59) of the protected second microcontroller (50);
• receiving the sensed measurement data by the first application (56), and comparing it to the stored comparison data;
• forwarding the comparison result to the second application (58);
unencrypted notifications, received by the first microcontroller (40) from the reading device (20), for the establishment of the connection being temporarily stored, the first microcontroller (40) analyzing the temporarily stored unencrypted notifications, interrupting the forwarding of the corresponding unencrypted notification in response to a sensing of a reference to the measurement data sensed by the sensor (70, 72) in an unencrypted notification, and prompting the provision of the comparison result for the sensed measurement data,
already forwarded temporarily stored notifications, in response to the forwarding of the sensed measurement data by the first microcontroller (40), being forwarded to the second application (58) again, and the interrupted forwarding being continued, the connection that is being established between the reading device (20) and the second application (58) being an encrypted end-to-end connection, encrypted APDUs being exchanged via the encrypted end-to-end connection in the form of encrypted command APDUs and encrypted response APDUs.

## Revendications

1. Jeton d'ID (10) doté d'un capteur (70, 72), d'une interface de communication (30) et d'un premier micro dispositif de commande (40), où le jeton d'ID (10) comprend un deuxième micro dispositif de commande '50) sécurisé avec au moins une interface de communication de micro dispositif de commande (59), lequel est disposé dans un logement (60) du jeton d'ID (10), où l'interface de communication du micro dispositif de commande (59) fournit une entrée de données et une sortie de données,
• dans lequel le capteur (70, 72) est conçu pour détecter des données de mesure,
• dans lequel le premier micro dispositif de commande (40), pour l'échange de données avec l'interface de communication du micro dispositif de commande (59) du deuxième micro dispositif de commande (50) sécurisé, est relié avec le capteur (70, 72) et avec l'interface de communication (30) du jeton d'ID (10) et où le premier micro dispositif de commande (40) est conçu pour échanger des données avec un lecteur (20) par le biais de l'interface de communication (30) du jeton d'ID (10),
• dans lequel le deuxième micro dispositif de commande (50) sécurisé comprend une première et une deuxième application (56, 58),
• dans lequel la première application (56) est conçue pour comparer les données de mesure du capteur (70, 72) avec des données de comparaison, lesquelles sont stockées dans une mémoire (54) du deuxième micro dispositif de commande (50) et pour transmettre le résultat de la comparaison à la deuxième application (58),
• dans lequel la deuxième application (58) est conçue pour établir une liaison avec le lecteur (20) sous la forme d'une liaison cryptée de bout en bout et pour produire des données spécifiées par un ordre de lecture du lecteur (20), où les données spécifiées par un ordre de lecture du lecteur (20) sont produites par le biais de la liaison cryptée de bout en bout, où des messages APDU cryptés sont transmis par le biais de la liaison cryptée de bout en bout,
• dans lequel le premier micro dispositif de commande (40) est configuré en tant que proxy, entre la détection des données de mesure par le capteur (70, 72) et une transmission des données de mesure détectées par le capteur (70, 72) à la première application (56) du deuxième micro dispositif de commande (50) sécurisé par le biais de son interface de communication de micro dispositif (59) d'une part, et une transmission d'informations pour l'établissement d'une liaison entre la deuxième application (58) et le lecteur (20), et/ou une transmission d'APDU par le biais de la liaison entre la deuxième application 58) et le lecteur (20), d'autre part,
dans lequel le premier micro dispositif de commande (40) est conçu pour réceptionner, stocker de manière intermédiaire et transmettre toutes les informations envoyées dans le cadre de l'établissement de la liaison cryptée de bout en bout du lecteur (20) à la deuxième application (58), où le premier micro dispositif de commande (40) est en outre conçu pour :
• au cours de l'établissement de la liaison cryptée de bout en bout, pour analyser des informations non cryptées du lecteur (20) envoyées par le lecteur (20) à la deuxième application (58), reçues par le premier micro dispositif de commande (40) et stockées de manière intermédiaire à l'état non crypté,
• dans le cas où une information non cryptée fait référence aux données de mesures détectées par le capteur (70, 72), pour interrompre la transmission de l'information non cryptée correspondante et envoyer une demande pour la détection des données de mesure au capteur (70, 72),
• suite à la demande, pour réceptionner les données de mesure détectées par le capteur (70, 72) et transmettre à la première application (56) pour provoquer la production d'un résultat de comparaison pour les données de mesure détectées par la première application (56) pour la deuxième application (58),
• suite à la transmission des données de mesure, pour retransmettre une nouvelle fois toutes les informations stockées de manière intermédiaire déjà transmises à la deuxième application (58),
• pour poursuivre la transmission interrompue et pour transmettre l'information stockée de manière intermédiaire et non cryptée à la deuxième application (58).

2. Jeton d'ID (10) selon l'une des revendications précédentes, dans lequel l'au moins une interface de communication de micro dispositif de commande (59) du deuxième micro dispositif de commande (50) sécurisé est une interface de communication (59) avec contact, et/ou
dans lequel le deuxième micro dispositif de commande (50) sécurisé comprend précisément une interface de communication de micro dispositif de commande (59).

3. Jeton d'ID (10) selon l'une des revendications précédentes, dans lequel le premier micro dispositif de commande (40) est conçu pour échanger des données sans contact avec un lecteur (20) par le biais de l'interface de communication (30) du jeton d'ID (10), ou dans lequel le premier micro dispositif de commande (40) est conçu pour échanger des données avec contact avec un lecteur (20) par le biais de l'interface de communication (30) du jeton d'ID (10).

4. Jeton d'ID (10) selon l'une des revendications précédentes, dans lequel, dans le cas des données de mesure, il s'agit d'une ou de plusieurs caractéristiques biométriques, d'un code PIN, de données d'accélération, de coordonnées GPS et/ou de données de température, et/ou
où le jeton d'ID (10) présente une multiplicité de capteurs différents pour la détection d'une multiplicité de données de mesure différentes avec lesquelles le premier micro dispositif de commande (40) est relié pour l'échange de données, dans lequel la première application (56) est conçue pour comparer les données de mesure de chaque capteur (70, 72) avec des données de comparaison, lesquelles sont stockées dans une mémoire (54) du deuxième micro dispositif de commande (50), et pour transmettre les résultats de la comparaison à la deuxième application (58).

5. Jeton d'ID (10) selon l'une des revendications précédentes, dans lequel le premier micro dispositif de commande (40) est configuré en tant que maître et le deuxième micro dispositif de commande (50) sécurisé est configuré en tant qu'esclave.

6. Jeton d'ID (10) selon l'une des revendications précédentes, dans lequel le deuxième micro dispositif de commande (50) est protégé physiquement par un ou plusieurs parmi les éléments suivants : un capteur de fréquence d'horloge, un capteur de température, un capteur de tension et/ou un capteur de lumière, et/ou
dans lequel le deuxième micro dispositif de commande (50) est protégé de manière cryptographique par un ou plusieurs parmi les éléments suivants : un générateur de nombres aléatoires, un générateur de clés cryptographiques, un générateur de hachage, un module de chiffrement/ de déchiffrement, un module de signature, un ou plusieurs certificats et/ou une ou plusieurs clés cryptographiques non migrables.

7. Jeton d'ID (10) selon l'une des revendications précédentes, dans lequel l'interface de communication du micro dispositif de commande (59) du deuxième micro dispositif de commande (50) sécurisé est solidement relié par voie filaire avec le premier micro dispositif de commande (40), ou
dans lequel le deuxième micro dispositif de commande (50) sécurisé est conçu sous forme d'un module échangeable et le logement (60) du jeton d'ID (10) est conçu sous forme de connecteur pour le module, dans lequel l'interface de communication du micro dispositif de commande (59) du deuxième micro dispositif de commande (50) sécurisé est en contact de manière amovible avec le premier micro dispositif de commande (40).

8. Jeton d'ID (10) selon l'une des revendications précédentes, où le jeton d'ID (10) présente un dispositif d'émission (80, 82) avec lequel le premier micro dispositif de commande (40) est relié pour l'échange de données.

9. Système (100), lequel comprend un jeton d'ID (10) selon l'une des revendications précédentes et un lecteur (20) doté d'une interface de communication (22) pour l'échange de données avec une interface de communication (30) du jeton d'ID (10), dans lequel le lecteur (20) est conçu pour établir une liaison cryptée de bout en bout avec la deuxième application (58) du deuxième micro dispositif de commande (50) sécurisé et pour envoyer des APDU cryptés par le biais de la liaison cryptée de bout en bout établie à la deuxième application (58) et/ou pour les recevoir par la deuxième application (58).

10. Procédé de vérification de données de mesure du capteur (70, 72) d'un jeton d'ID (10) selon l'une des revendications 1 à 8 au moyen du deuxième micro dispositif de commande (50) sécurisé, le procédé comprenant :
∘ la transmission d'une demande d'établissement d'une liaison entre le lecteur (20) et la deuxième application (58) du deuxième micro dispositif de commande (50) sécurisé :
• la réception de la demande par le premier micro dispositif de commande (40) par le biais de l'interface de communication (30) du jeton d'ID (10),
• la transmission de la demande par le premier micro dispositif de commande (40) à la deuxième application (58) du deuxième micro dispositif de commande (50) sécurisé par le biais de l'interface de communication de micro dispositif de commande (59) du deuxième micro dispositif de commande (50) sécurisé,
∘ l'établissement de la liaison entre le lecteur (20) et la deuxième application (58) :
• l'échange d'informations pour l'établissement de la liaison entre le lecteur (20) et la deuxième application (58) par le biais de l'interface de communication (30) du jeton d'ID (10), le premier micro dispositif de commande (40) et l'interface de communication de micro dispositif de commande (59) du deuxième micro dispositif de commande (50) sécurisé,
∘ l'échange d'APDU entre le lecteur (20) et la deuxième application (58) par le biais de la liaison :
• la réception d'un APDU d'ordre par le premier micro dispositif de commande (40) par le biais de l'interface de communication (30) du jeton d'ID (10), où l'APDU d'ordre demande le résultat de comparaison de la comparaison exécutée par la première application (56) de données de mesure détectées par le capteur (70, 72) avec des données de comparaison,
• la transmission de l'APDU d'ordre par le premier micro dispositif de commande (40) à la deuxième application (58) par le biais de l'interface de communication de micro dispositif de commande (59) du deuxième micro dispositif de commande (50) sécurisé,
• l'établissement d'un APDU de réponse suite à l'APDU d'ordre reçu par la deuxième application (58) moyennant l'emploi du résultat de comparaison réceptionné par la première application (56),
• la réception de l'APDU de réponse par le premier micro dispositif de commande (40),
• la transmission de l'APDU de réponse par le premier micro dispositif de commande (40) au lecteur (20) par le biais de l'interface de communication (30) du jeton d'ID (10)
la production du résultat de comparaison pour les données de mesure détectées :
• l'envoi d'une demande pour la détection des données de mesure au capteur (70, 72) par le premier micro dispositif de commande (40),
• la détection des données de mesure par le capteur (70, 72),
• la réception des données de mesures détectées par le premier micro dispositif de commande (40),
• la transmission des données de mesure détectées par le premier micro dispositif de commande (40) à la première application (56) par le biais de l'interface de communication de micro dispositif de commande (59) du deuxième micro dispositif de commande (50) sécurisé,
• la réception des données de mesure détectées par la première application (56) et la comparaison avec les données de comparaison stockées,
• la transmission du résultat de comparaison à la deuxième application (58),
dans lequel des informations non cryptées réceptionnées par le premier micro dispositif de commande (40) du lecteur (20) sont stockées de manière intermédiaire pour l'établissement de la liaison, où le premier micro dispositif de commande (40) analyse, suite à la détection d'une prise en compte des données de mesure détectées par le capteur (70, 72) dans une information non cryptée, les informations non cryptées stockées de manière intermédiaire, la transmission de l'information non cryptée correspondante et provoque la production du résultat de comparaison pour les données de mesure détectées, où des informations stockées de manière intermédiaire déjà transmises sont de nouveau retransmises suite à la transmission des données de mesure détectées par le premier micro dispositif de commande (40) à la deuxième application (58) et la transmission interrompue est poursuivie,
dans lequel la liaison, laquelle est établie entre le lecteur (20) et la deuxième application (58), est une liaison cryptée de bout en bout, où des APDU cryptés par le biais de la liaison cryptée de bout en bout sont échangés sous forme d'APDU d'ordre et d'APDU de réponse cryptés.
